**Europäisches Patentamt**

**European Patent Office**

**Office européen des brevets**

(11) Numéro de publication: **0 008 557**
**A2**

# (12) DEMANDE DE BREVET EUROPEEN

(21) Numéro de dépôt: **79400574.4**

(22) Date de dépôt: **16.08.79**

(51) Int. Cl.³: **G 03 B 27/46**

(30) Priorité: **17.08.78 FR 7823969**

(43) Date de publication de la demande:
**05.03.80 Bulletin 80/5**

(84) Etats Contractants Désignés:
**BE CH DE GB IT**

(71) Demandeur: **EASTMAN KODAK COMPANY**
**343 State Street**
**Rochester, New York 14650(US)**

(72) Inventeur: **Fruchard, Alain Gabriel Marie**
**Kodak-Pathe 30, rue des Vignerons**
**F-94300 Vincennes(FR)**

(72) Inventeur: **Lassalle, Albert**
**Kodak-Pathe 30, rue des Vignerons**
**F-94300 Vincennes(FR)**

(72) Inventeur: **Olivieri, Marc**
**Kodak-Pathe 30, rue des Vignerons**
**F-94300 Vincennes(FR)**

(74) Mandataire: **Mestre, Jean**
**KODAK-PATHE 30, rue des Vignerons**
**F-94300 Vincennes(FR)**

(54) Appareil de tirage photographique en couleurs et procédé de détermination des durées d'exposition.

(57) L'invention est relative à une tireuse automatique pour obtenir un nombre quelconque d'épreuves à partir des originaux contenus dans un ordre donné et à un procédé de détermination des durées d'exposition.

La tireuse comprend un poste d'analyse déterminant des durées d'exposition constantes lorsque les originaux présentent une densité située à l'extérieur d'un intervalle de densité $d_1$, $d_2$ et des durées d'exposition dont les logarithmes croissent linéairement entre ces limites. Avantageusement on peut faire varier la pente des droites représentant la courbe $\log t = f(d)$.

Application à la réalisation d'une tireuse photographique pour diapositives.

./...

EP 0 008 557 A2

FIG. 3

La présente invention, due à la collaboration de Messieurs Alain, Gabriel, Marie FRUCHARD, Albert LASSALLE et Marc OLIVIERI et réalisée dans les services de la demanderesse, est relative à un appareil de tirage photographique et à un procédé de détermination des durées d'exposition et, plus particulièrement, à un tel appareil et procédé adaptés à des originaux en couleurs sous forme de diapositives.

Habituellement, lors du tirage photographique des diapositives, les diapositives sont introduites manuellement, une à une, dans un support les centrant en position de tirage sous l'objectif.

L'organisation la plus sommaire de la chaîne de travail comporte l'ouverture par l'opératrice de tirage de la pochette renfermant l'ordre du client, l'extraction des originaux, puis, pour chaque original, la détermination des corrections en densité et en couleurs à apporter éventuellement au réglage moyen de la tireuse, le dépoussiérage, l'introduction en position de tirage, la manipulation des touches de correction, le déclenchement du nombre d'expositions voulu, le retrait de la diapositive et son rangement dans la pochette. L'inconvénient de cette façon de procéder est que le temps de tirage proprement dit, celui pendant lequel le papier est mis en place et exposé est faible devant le temps total d'immobilisation de la tireuse. Pour une production importante, il faudrait un parc élevé de tireuses. D'autre part, l'opératrice qualifiée pour déterminer les corrections à apporter au réglage moyen de la tireuse ne passe qu'une fraction de son temps à cette opération et la majeure partie à des tâches qui pourraient être réalisées par du personnel moins spécialisé.

Une organisation plus poussée comporte la préparation de boîtes d'originaux à un poste de préparation séparé du poste de tirage. Les pochettes sont ouvertes, les originaux extraits, le nombre d'exemplaires à tirer de chaque original est reporté sur la monture, un numéro d'identification est composté sur chaque original et sur la pochette, les diapositives sont rangées dans des boîtes et les pochettes vides rassemblées en lots identifiés par des fiches portant les numéros des boîtes.

Les boîtes sont ensuite transmises à un poste d'étalonnage où une seconde opératrice se charge de déterminer les corrections de couleurs et de densité à apporter au réglage moyen de la tireuse, puis elles sont transmises à une troisième opératrice qui s'occupe du tirage.

L'opératrice de tirage doit sortir les diapositives de leur boîte, les dépoussiérer, les introduire une à une dans la tireuse, lire sur les montures et reporter sur le clavier de la tireuse le nombre d'exemplaires et les instructions de réglage, déclencher les expositions, récupérer les diapositives et les remettre dans leur boîte.

L'inconvénient de cette seconde organisation, si elle pallie les défauts de la première est de multiplier le nombre de manipulations de chaque diapositive et d'ajouter des opérations telles d'inscription sur les pochettes, lecture, compostage d'identification. Un parc moins important de tireuses suffit pour écouler la production, mais la somme de travail est plus élevée. Des variantes consistent à préparer les ordres et étalonner les diapositives sur un même poste et à tirer les diapositives sur un autre poste ou à préparer sur un premier poste et à étalonner et à tirer sur la tireuse.

Le but de l'invention est d'accroître la productivité du tirage des diapositives et de simplifier l'ensemble des opérations qui sont effectuées en utilisant les techniques antérieures.

Dans tous les cas, que l'on applique les techniques antérieures, que l'on utilise la présente invention, un minimum d'opérations préliminaires au tirage sont indispensables :

Ouvrir les pochettes, en extraire les diapositives, orienter chaque diapositive dans le sens convenable pour le tirage. Ces préparations minimales suffisent si elles sont effectuées pochette par pochette au fur et à mesure du tirage. Les diapositives sont réintroduites dans leur pochette aussitôt tirées et les risques de mélange d'un ordre à l'autre sont assez réduits pour qu'il soit inutile de composter chaque diapositive afin de l'identifier avec la pochette d'où elle provient.

Le temps nécessaire pour effectuer la préparation simplifiée d'un ordre d'importance moyen est inférieur ou du même ordre de grandeur que le temps nécessaire pour le tirer. Par conséquent, si le tirage d'un ordre s'effectue d'une façon entièrement automatique, c'est-à-dire sans intervention de l'opératrice original par original, celle-ci se trouve libérée pendant le tirage d'un ordre durant le temps suffisant pour préparer l'ordre suivant. La capacité de production de la tireuse n'est pas diminuée par la manipulation des pochettes et on économise une partie du temps de la préparation complète effectuée généralement dans les techniques antérieures par une autre opératrice en dehors du poste de tirage.

En supprimant le temps de préparation complet avec compostage, temps supérieur au temps passé pour le tirage, on divise au moins par deux le temps entièrement passé pour l'ensemble des opérations.

Le dispositif suivant l'invention, qui permet le traitement automatique des diapositives et leur restitution ordre par ordre après tirage, n'est adaptable que sur des tireuses déjà suffisamment automatiques par elles-mêmes, c'est-à-dire des tireuses qui ont un poste de détermination automatique des durée d'exposition. Une bonne qualité des épreuves produites, avec un taux de malfaçons au premier tirage acceptable, n'est en effet obtenue sans étalonnage individuel des originaux qu'avec au moins une correction couleur automatique et si possible une compensation du contraste.

Toutefois on a déjà proposé, par exemple pour la tireuse décrite dans l'article 16054 publié en août 1977 dans la revue "Research Disclosure" d'utiliser des chargeurs, distincts pour chaque ordre qui s'adaptent sur la tireuse à un dispositif faisant défiler une à une les diapositives en position de tirage. La tireuse comprend un dispositif de dépoussiérage automatique et un dispositif d'analyse de l'original appelé aussi diapositive qui permet de déterminer les durées d'exposition.

Cette tireuse ne permet d'obtenir qu'une seule épreuve de chaque original et ne traite que des ordres d'un nombre minimum de ⁷/ trois originaux. Si l'ordre contient un nombre inférieur d'originaux l'opératrice complète à ⁷/ trois le nombre d'originaux en ajoutant des montures de diapositives sans original ce qui provoque une perte de temps et de papier. Il est bien sûr indiqué qu'on peut tirer des ordres ne contenant qu'une seule diapositive, toutefois, aucun mode de réalisation n'y est décrit ni représenté.

Avec cette tireuse on peut éviter le poste de préparation de la technique antérieure et le compostage de l'indicatif de l'ordre sur la monture des diapositives.

L'invention a pour objet de fournir une tireuse de diapositives dans laquelle on peut obtenir un nombre quelconque variable d'épreuves pour chaque original et dans laquelle on peut tirer des ordres ne contenant qu'une seule diapositive sans avoir à introduire des montures de diapositives pour compléter un ordre donné.

Comme on l'a vu précédemment la tireuse doit avoir un poste d'analyse des originaux capable de fournir une correction automatique de la couleur.

Dans la technique antérieure, on utilise des analyseurs analogues à ceux étudiés pour le tirage des originaux négatifs. Toutefois ces analyseurs ne fonctionnent en inversible que de façon imparfaite. On peut aussi obtenir les durées d'exposition pour les tirages de diapositives en se basant sur une analyse trichromatique. Par exemple, la tireuse décrite dans l'article 16054 de la revue "Research Disclosure" publiée en août 1977 utilise trois jeux de cellules sensibles respectivement au bleu, au vert et au rouge et qui reçoivent la lumière diffusée par la diapositive afin de limiter les durées d'exposition en commandant l'introduction de filtres jaune, magenta et cyan respectivement sur le faisceau de tirage.

Le but de la présente invention est de fournir un dispositif de détermination des durées d'exposition qui permette d'obtenir des durées d'exposition aussi courte que possible pour des originaux très denses tout en fournissant une épreuve acceptable après traitement.

D'autres caractéristiques et avantages de l'invention apparaîtront à la lecture de la description et des revendications qui suivent et à l'examen du dessin annexé dans lequel :

- la figure 1 représente la tireuse suivant l'invention ;

- la figure 2 représente un mode de réalisation du mécanisme de la tireuse ;

- la figure 3 représente le schéma du poste d'analyse et du poste de tirage ;

- la figure 4 est un circuit possible de commande des durées d'exposition ;

- la figure 5 représente les courbes permettant de déterminer les durées d'exposition en fonction des densités des diapositives ;

- les figures 6 et 7 représentent un mode de réalisation possible du circuit de correction automatique couleur ;

- la figure 8 représente un mode de réalisation du circuit permettant la transformation analogique du signal en un signal numérique, et ;

- la figure 9 est un mode de réalisation du circuit de corrections manuelles.

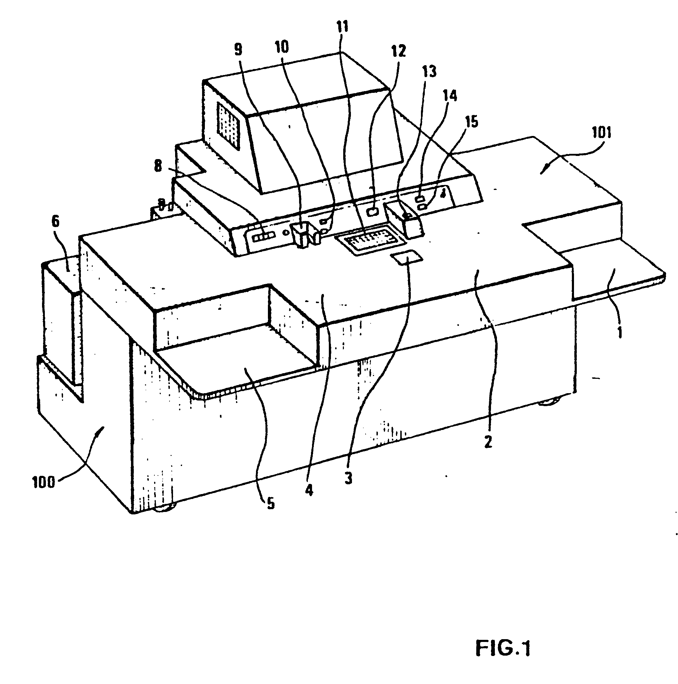

Comme on le voit sur la figure 1, la tireuse comprend un châssis 100 surmonté d'une table 101. Lors de la réception des ordres les diapositives parviennent au laboratoire de tirage dans des enveloppes ou pochettes qui sont rangées dans des paniers de pochettes à traiter. Par "pochettes à traiter" on entend les pochettes contenant un certain nombre de diapositives et dont on doit obtenir des épreuves. Avantageusement, la table 101 comprend deux tablettes 1 et 5 susceptibles de recevoir chacune un panier de pochettes. La tablette 1 reçoit les paniers de pochettes à traiter et la tablette 5 reçoit le panier de pochettes traitées, c'est-à-dire les pochettes contenant les diapositives qui ont déjà été exposées dans la tireuse.

La tireuse comporte de façon classique, un poste d'analyse, un poste d'exposition ou de tirage 139 muni d'une source de lumière 51, d'un condenseur, de filtres caloriques, d'un couloir pour maintenir l'original, d'un objectif 53 pour former une image nette de l'original sur un plan d'exposition, d'un obturateur et de filtres 54 permettant de régler l'exposition, un mécanisme de déplacement du produit d'enregistrement muni d'un chargeur débiteur de papier non représenté, d'un chargeur récepteur de papier 6 et d'un dispositif d'avance de papier non représenté, pour déplacer le papier 56 photosensible après chaque exposition, et un mécanisme de marquage pour permettre ultérieurement la coupe et la séparation des ordres distincts. Tous ces postes et mécanismes sont bien connus dans la technique photographique et ne seront pas décrits plus spécialement. On peut utiliser les divers postes d'une tireuse couleur

Kodak 2620 à l'exception du mécanisme de transport et de positionnement du film qui est remplacé par un mécanisme de transport et de positionnement des diapositives.

Lors du traitement des divers ordres par l'opératrice, on dispose un panier de pochettes à traiter, plein, sur la tablette 1 et un panier de pochettes traitées, vide, sur la tablette 5. L'opératrice prend une pochette dans le panier situé sur la tablette 1, ouvre la pochette et la vide sur la partie 2 de la table 101, prend une diapositive et l'oriente, c'est-à-dire dispose le grand côté et la face émulsionnée de la diapositive suivant des orientations données puis frappe le nombre d'exemplaires désirés de cette diapositive sur un clavier 11 de la tireuse. Le nombre d'épreuves commandé et frappé par l'opératrice apparaît sur un afficheur 12 sur le tableau 8 de la tireuse et est emmagasiné dans un registre à décalage non représenté. Ensuite, l'opératrice introduit la diapositive dans la fente 13 de la tireuse puis reprend une diapositive située sur la partie 2 de la table 101 et recommence les opérations précédentes d'orientation et de commande du nombre d'exemplaires désirés jusqu'à épuisement de l'ordre. A la fin de l'ordre l'opératrice frappe sur une touche "fin d'ordre" du clavier 11 et le nombre de diapositives contenues dans l'ordre est indiqué par l'afficheur 14 sur le tableau 8 de la tireuse. Cette indication est emmagasinée dans une mémoire non représentée. D'une manière analogue le tableau de commande 8 de la tireuse peut comporter un afficheur 15 qui fournit le nombre total d'épreuves de l'ordre.

Pendant ce temps, un voyant 10 de la tireuse indique à l'opératrice que l'ordre précédent a été traité par la tireuse et que toutes les diapositives de cet ordre précédent sont dans un godet de réception 9 disposé sur le tableau 8. L'opératrice enlève alors les diapositives du godet 9 et les replace dans leur pochette qui a été disposée préalablement en attente sur la partie 4 de la table 101, puis elle classe la pochette dans le panier situé sur la tablette 5.

Avantageusement, la tireuse comporte un dispositif de facturation ou préfacturation qui fournit une étiquette de facturation comportant au moins le nombre d'épreuves tirées et éventuellement le prix. L'opératrice colle cette étiquette sur la pochette située sur la partie 2 de la tireuse. Une fois l'étiquette collée l'opératrice dispose la pochette en attente sur la partie 4 de la table 101. Ensuite l'opératrice prend une nouvelle pochette dans le panier situé sur la tablette 1, l'ouvre et traite ce nouvel ordre comme indiqué précédemment. Pendant que l'opératrice introduit un ordre dans la tireuse, diapositive par diapositive, la tireuse traite automatiquement l'ordre précédent, c'est-à-dire analyse les diapositives en vue d'une correction automatique en densité et en couleurs, transfère les diapositives au poste d'exposition ou chaque diapositive est exposée le nombre de fois requis par l'opératrice au moyen du clavier 11 et enregistré dans le registre, déplace le papier photosensible 56 entre chaque exposition après y avoir fait une marque 65 servant à la coupe puis restitue les diapositives de l'ordre en vérifiant que leur nombre correspond à celui introduit par l'opératrice et affiche en 10 que le traitement de l'ordre est terminé.

Sauf pour les ordres importants à grand nombre d'exemplaires, la machine a été suffisamment rapide pour restituer les diapositives tirées avant que l'opératrice ait eu le temps d'achever le chargement et la préfacturation de l'ordre suivant. C'est donc l'aptitude de l'opératrice à charger, préfacturer, ranger, etc, ... sans interruption ou perte de temps, qui limite le débit du poste de tirage. Le travail est réalisé en moins de temps que celui mis au seul poste de préparation du mode opératoire antérieur, puisque plusieurs opérations ont été supprimées. Le temps nécessaire pour écouler une production correspond environ au tiers du temps total passé sur les trois postes de l'organisation antérieure. Il n'y a plus de travail en attente entre les trois postes et les délais sont améliorés. L'expérience montre d'autre part que le tirage entièrement automatique conduit à moins de malfaçon que l'étalonnage par une opératrice moyenne.

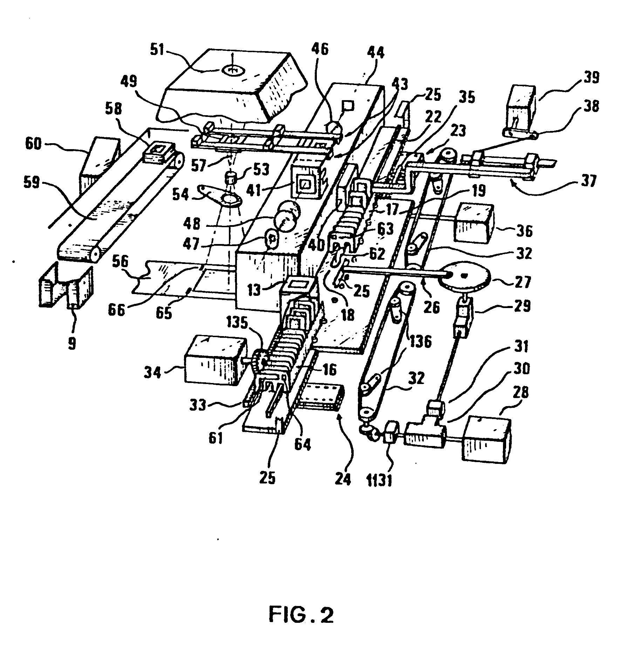

Comme on le voit sur la figure 2, le mécanisme de transport et de positionnement des diapositives comprend deux paniers distincts 16 et 17. Ces paniers sont analogues à ceux utilisés couramment pour les projecteurs de diapositives à paniers linéaires et ils peuvent être analogues à celui décrit au brevet français 2 066 108. Les paniers sont utilisés pour ranger les diapositives, lors du chargement de la tireuse, par introduction des diapositives par la fente 13 et, lors du tirage, pour extraire une à une les diapositives en vue de leur traitement ultérieur.

Les déplacements des deux paniers sont indépendants l'un de l'autre mais ces paniers suivent la même trajectoire qui a la forme d'une boucle fermée de manière à traverser tour à tour le poste de chargement puis le poste de déchargement et à revenir au poste de chargement.

Les paniers reposent sur un plan de glissement horizontal à trois sections. Le plan horizontal comporte une section centrale fixe, constituée de deux pistes, l'une pour le passage des paniers du poste de chargement au poste de déchargement et appelée piste "aller" 18, l'autre pour le passage des paniers du poste de déchargement au poste de chargement et appelée piste "retour" 19 et deux sections extrêmes qui peuvent être déplacées simultanément et latéralement de façon à être alignées avec l'une ou l'autre des deux pistes.

On appellera panier de chargement, le panier qui se trouve dans le poste de chargement et panier de déchargement le panier qui se trouve dans le poste de déchargement. Chaque panier est guidé longitudinalement par un rail 22 en téflon ou en une autre matière à faible coefficient de frottement. Le panier de chargement est pris en charge par un premier mécanisme de déplacement et il est pincé entre une languette métallique rigide 61 de ce premier mécanisme de déplacement et un doigt articulé à ressort, non représenté, de ce premier mécanisme de déplacement. La languette métallique rigide est située à l'amont tandis que le doigt articulé est situé à l'aval. Le premier mécanisme de déplacement comprend un moteur 34 permettant de faire tourner une roue dentée 135 venant en prise avec une crémaillère 33 solidaire de la languette 61.

On va décrire maintenant les divers déplacements d'un panier le long de sa trajectoire en forme de boucle fermée. Il est évident que l'autre panier effectue les mêmes déplacements à des instants différents.

En position de départ, le premier mécanisme de déplacement appuie sur une butée amont (non représentée) réglée pour que le premier compartiment du panier de chargement se trouve centré sous le conduit d'introduction des diapositives. Après chaque introduction d'une diapositive, le moteur 34 fait avancer d'un pas le panier de chargement de manière qu'un compartiment vide de ce panier soit centré sous le conduit d'introduction des diapositives. Lorsque l'opératrice a introduit la dernière diapositive d'un ordre elle appuie sur la touche "fin d'ordre" du clavier 11. Une des fonctions de la touche "fin d'ordre" est d'autoriser, si la localisation du second panier le permet, la translation du premier panier du poste de chargement vers le poste de déchargement.

Le mouvement de déplacement fourni par le moteur 34 du premier mécanisme de déplacement est alors en mouvement d'avance continue, rapide dans sa première partie, puis ralenti pour éviter les chocs, jusqu'à une butée aval (non représentée). Le moteur 34 sollicite le premier mécanisme de déplacement contre cette butée aval par l'intermédiaire d'un limiteur de couple. La butée aval est réglée pour que le premier compartiment du panier se trouve alors en face d'un poussoir 37 qui extraira les diapositives du panier pour les diriger vers les postes d'analyse et de tirage.

Le moteur 34 peut inverser son sens de rotation pour ramener le premier mécanisme de déplacement lorsqu'il aura été libéré de la manière décrite par la suite jusqu'à sa position de départ dans laquelle le mécanisme appuie contre la butée amont mentionnée précédemment.

Le panier qui vient d'arriver dans le poste de déchargement est pris en charge par un second mécanisme analogue au premier. Avantageusement, le premier mécanisme est disposé à gauche de la trajectoire suivie par le panier tandis que le second mécanisme est disposé à droite. De cette manière les courses des glissières et des crémaillères peuvent se chevaucher dans la zone d'échange des mécanismes.

Le second mécanisme de déplacement comprend lui aussi une languette métallique rigide analogue à la languette 61 et contre laquelle vient appuyer la face aval du panier. Le second mécanisme comprend aussi un doigt articulé 62 à ressort qui sollicite le panier contre la languette et un moteur 36 à deux sens de rotation pouvant déplacer vers l'avant ou vers l'arrière une crémaillère 35. Après qu'une diapositive ait été extraite du panier pour être introduite dans le poste d'analyse par le poussoir 37, le second mécanisme de déplacement avance le panier de déchargement d'un pas de manière à présenter le compartiment muni de la diapositive suivante devant le poussoir 37. Lorsque la dernière diapositive est extraite du panier, le mécanisme de déplacement avance le panier de déchargement jusqu'à une deuxième butée aval libérant ainsi l'entrée du poste de déchargement pour le panier suivant. En fin de course, le doigt articulé 62 bascule et passe en dessous du plan de glissement des paniers.

Lorsqu'il faut échanger les paniers, la tireuse se trouve dans la situation suivante :

a) les sections extrêmes du plan de glissement sont alignées avec la piste "aller",

b) le panier de déchargement est vide et il a été déplacé vers l'avant et se trouve sur la section mobile 23 du plan de glissement ; le doigt articulé 62 du deuxième mécanisme de déplacement a basculé et se trouve en-dessous du plan de glissement ;

c) le panier de chargement qui est au moins partiellement rempli a quitté la section mobile 24 du plan de glissement et se trouve maintenu par le premier mécanisme de déplacement à l'entrée du poste de déchargement ; ce panier n'est pas encore pris en charge par le second mécanisme de déplacement.

On va décrire maintenant le retour du panier vide du poste de déchargement au poste de chargement, la prise en charge du panier plein par le second mécanisme de déplacement, la libération et le retour du premier mécanisme de déplacement à sa position de départ.

Les sections mobiles 23 et 24 du plan de glissement sont reliées entre elles par une tringle 25 sur laquelle agit une bielle 26. La mise en oeuvre d'un moteur 28 relié de manière appropriée à un excentrique 27 permet d'agir sur la bielle 26 de manière à déplacer simultanément les deux sections mobiles 23 et 24 pour les aligner avec la piste "retour". La section mobile 24 est vide tandis que la section mobile 23 porte le panier vide.

Le moteur 28 est aussi relié à un mécanisme de transport constitué de courroies 32 en caoutchouc tendues par des tendeurs 136. Lorsqu'on met en oeuvre le moteur 28, il fait tourner les courroies 32 de manière continue par l'intermédiaire d'un embrayage 1131 tandis qu'il ne fait tourner le plateau 27 que d'un demi-tour par l'intermédiaire d'un embrayage 31.

La translation des deux sections mobiles met en contact le flanc du panier vide et les courroies caoutchoutées 32 ce qui déplace le panier sur la piste de "retour" et amène ce panier sur la section mobile 24 du plan de glissement. Un capteur non représenté permet d'agir sur l'embrayage 1131 lorsque le panier est en butée sur la section mobile 24.

Le second mécanisme de déplacement, doigt 62 basculé vers le bas, recule pour reprendre sa position de départ. Le doigt 62 passe sous le panier plein et lorsque le second mécanisme de déplacement arrive en butée, sa languette rigide se trouve contre l'avant du panier plein alors que son doigt articulé est passé derrière le panier. Le doigt se relève et sollicite le panier à venir en butée contre la languette rigide puis se verrouille en position haute. La prise en charge du panier de déchargement par le second mécanisme de déplacement est alors fait.

Le second mécanisme de déplacement porte aussi une excroissance, non représentée, en forme de rampe qui lors du retour de ce second mécanisme vers sa position initiale, déverrouille et abaisse le doigt articulé, non représenté, du premier mécanisme de déplacement. Ceci libère le premier mécanisme de déplacement qui peut donc revenir à sa position initiale, son doigt passant sous le panier devenu panier de déchargement. Lorsque le premier mécanisme de déplacement arrive à sa position initiale en butée, son doigt est baissé.

A ce moment, on excite de nouveau l'embrayage 31 de manière à faire tourner l'excentrique 27 d'un demi-tour pour réaligner les sections mobiles 23 et 24 avec la piste "aller". La section 23 est vide, tandis que la section 24 porte le panier vide et place ce dernier de manière qu'il soit pincé entre la languette rigide 61 et le doigt articulé du premier mécanisme de déplacement. On relève alors le doigt articulé du premier mécanisme de déplacement qui sollicite ce panier contre la languette rigide 61 et on le verrouille en position relevée. Le panier vide est donc pris en charge par le premier mécanisme de déplacement et se trouve/la position de départ, son premier compartiment étant centré avec le conduit d'introduction.

La succession des déplacements, depuis la mise en oeuvre de la touche "fin d'ordre" jusqu'à l'arrivée d'un panier vide prêt à recevoir la première diapositive de l'ordre suivant dure environ 3 à 4 secondes. Cette durée est inférieure au temps qu'il faut à l'opératrice pour prendre les diapositives de l'ordre précédent situées dans le godet 9 et les introduire dans la pochette correspondante, ranger la pochette dans le panier posé sur la tablette 5, coller l'étiquette de facturation ou préfacturation sur la pochette située sur la partie 2 de la table 101 et disposer cette pochette en attente sur la partie 4 de la table 101, prélever dans le panier situé sur la tablette 1 une pochette à traiter, ouvrir cette pochette et la vider sur la partie 2 de la table 101. Le travail de l'opératrice n'est donc interrompu par l'échange des paniers que dans le cas d'ordres comportant un nombre d'originaux supérieur au nombre de

10

0008557

compartiments utilisables du panier et dans ce cas, la tireuse échange automatiquement les paniers entre le dépôt du dernier original dans le panier de chargement et la réouverture du volet d'obturation situé dans le poste de chargement et permettant l'introduction de l'original suivant.

On va décrire maintenant le fonctionnement de la tireuse.

Lorsque l'opératrice charge, diapositive après diapositive, la tireuse, elle introduit une diapositive dans la fente 13 du poste de chargement. Ce poste comprend un conduit pratiquement vertical qui guide les diapositives vers un compartiment du panier situé dans le poste chargement. Les diapositives tombent par gravité. Le poste de chargement comprend aussi un volet d'obturation, non représenté, mis en oeuvre par un électroaimant et qui ne libère le passage dans le conduit que lorsque le panier de chargement peut recevoir des diapositives. Lors du déplacement du panier ou lorsqu'il n'y a pas de panier dans le poste de chargement le volet d'obturation empêche l'introduction d'une diapositive. Le poste de chargement comprend en plus deux capteurs permettant d'y déterminer la position des diapositives. Un premier capteur détecte la présence d'une diapositive dans la fente 13. Un deuxième capteur non représenté est localisé juste au-dessus du niveau supérieur des diapositives reposant sur le fond des compartiments du panier 16 et est situé à un peu plus de 50 mm en-dessous du niveau du volet d'obturation. Lorsqu'une diapositive passe devant ce deuxième capteur, le volet d'obturation se ferme. La fin du passage d'une diapositive valide la mise en mémoire du nombre d'épreuves commandées et autorise l'avance du panier. Simultanément, on augmente d'une unité le contenu de deux compteurs $C_1$ et $C_2$ non représentés. Lorsque le panier est avancé d'un pas, on ouvre le volet d'obturation sauf si le compteur $C_2$ indique un nombre égal au nombre de compartiments utilisables du panier. Dans l'exemple utilisé, le nombre de compartiments utilisables du panier est de 30. Dans ce cas, ou bien l'ordre est terminé car il comporte 30 diapositives originales, l'opératrice agit sur la touche "fin d'ordre" et tout se passe comme dans le cas général des ordres de moins de 30 diapositives, ou bien l'opératrice présente une diapositive supplémentaire dans la fente 13. Cette trente-et-unième diapositive est alors retenue par le volet d'obturation, mais elle excite le premier capteur qui se trouve juste au-dessus du volet d'obturation. L'excitation du premier capteur commande alors le départ du panier de chargement plein vers le poste de déchargement sans qu'il y ait eu action sur la touche "fin d'ordre". A ce moment, le compteur $C_2$ est remis à 0 et recommence à compter à partir de 1 jusqu'à un maximum de 30 les diapositives que l'on introduit dans la fente 13 et qui sont emmagasinées dans le second panier. Le compteur $C_1$ continue à totaliser au-delà de 30 les diapositives jusqu'à la fin de l'ordre. L'action sur la touche "fin d'ordre" transfère le contenu du compteur $C_1$ à l'afficheur 14 et au dispositif de préfacturation.

On remarquera que le premier capteur est mis en oeuvre alors que l'opérateur tient encore à la main la diapositive à introduire. Le second capteur au contraire, est hors d'atteinte de l'action manuelle de l'opérateur ; la diapositive doit avoir été lâchée pour être détectée par ce capteur. La position du second capteur rend impossible la présentation d'une diapositive que l'on retirerait ensuite, ce qui serait interprété par le capteur comme un passage de diapositive et introduirait des données erronées. Avantageusement, on introduit une temporisation sur le second capteur. Cette temporisation correspond à un peu plus de la durée de chute normale d'une diapositive pendant laquelle une seule information de passage peut être prise en compte. On détecte ainsi correctement toutes les diapositives, même celles dont les rivets ne sont pas opaques ou celles dont les montures ont été perforées ou découpées comme le pratiquent certains clients pour leur système de classement personnel.

Le deuxième capteur étant situé juste au-dessus du niveau supérieur des diapositives reposant sur le fond du panier permet de s'assurer que ces diapositives sont correctement introduites dans les divers compartiments du panier.

Une fois le panier complètement rempli ou lorsque la touche "fin d'ordre" a été mise en oeuvre, on déplace le panier de chargement vers le poste de déchargement où il est pris en charge par le second mécanisme de déplacement de la manière décrite précédemment alors que le panier vide revient par la piste "retour" vers le poste de chargement.

Les diapositives sont alors extraites du panier plein et conduites au poste d'analyse d'une manière analogue à celle pratiquée sur les projecteurs de diapositives pour les placer dans la fenêtre de projection. Pour ce faire, la tireuse comprend une rampe, non représentée, fixée sur le plan de glissement des paniers. Cette rampe soulève les diapositives de façon que le bas des montures soit plus haut que le rebord gauche du panier. A ce moment, on excite un moteur 39 qui tourne d'un tour pour chaque excitation et qui déplace un poussoir 37 par l'intermédiaire d'un système de bielle manivelle 38 . Le mouvement de va et vient du poussoir 37 amène une diapositive dans la fenêtre d'analyse, l'y abandonne et le poussoir revient dans sa position de départ à droite du panier. Lorsqu'il est revenu à sa position de départ, le deuxième mécanisme de déplacement fait avancer le panier de déchargement d'un pas.

On dispose un couloir 40 aménagé, pour le dépoussiérage, d'une manière bien connue dans la technique et comprenant un dispositif soufflant de l'air comprimé et aspirant les poussières entre la sortie du panier de déchargement et l'entrée dans le poste d'analyse. Lorsque la diapositive traverse le couloir 40 elle y est automatiquement dépoussiérée.

Lorsque toutes les diapositives ont été extraites du panier de déchargement, un capteur, non représenté, disposé dans le poste de déchargement détecte

0008557

l'absence de diapositives dans le panier de déchargement et met en oeuvre le second mécanisme de déplacement pour déplacer le panier de manière continue vers la section mobile 23.

Chaque diapositive extraite du panier de déchargement parvient dans un cadre basculant 41 du poste d'analyse. Ce cadre peut occuper une position horizontale et une position verticale. Ce cadre bascule au moyen d'un électro-aimant et retourne à sa position d'origine au moyen d'un ressort de rappel. En position verticale, le cadre est aligné avec le poussoir 37, le compartiment du panier où se trouve la diapositive à extraire et le couloir de dépoussiérage 40. Le poste d'analyse 44, qui sera décrit plus en détail par la suite comprend d'une manière générale, devant le cadre basculant une lampe d'analyse 47, un jeu de condenseurs et de verres anticaloriques 48 et, en arrière du cadre 41, un objectif de projection 46, une lame séparatrice ——————dédoublant——————l'image formée par l'objectif et ——— deux dispositifs mélangeurs de lumière muni chacun d'une cellule photosensible. Le dispositif d'analyse fonctionne de la manière décrite par la suite et fournit les diverses durées d'exposition qui sont enregistrées dans des mémoires non représentées.

Le poste d'analyse 44 comprend aussi un capteur mis en oeuvre lorsqu'une diapositive est située dans le cadre basculant. La fin du passage d'une diapositive commande avec un léger retard, l'analyse et l'enregistrement des résultats d'analyse. L'enregistrement des mesures d'analyse autorise le basculement ultérieur du cadre et le passage de la diapositive de la position verticale à la position horizontale. La diapositive se trouve ainsi dans le plan objet de l'objectif de tirage et elle est alignée avec le couloir de tirage mais encore en dehors du champ de l'objectif.

Le poste de tirage 139 est muni de deux paires de griffes 43, 57 animées d'un mouvement de va-et-vient grâce à un mécanisme non représenté. La course des griffes est ajustée de manière que, lorsqu'elles déplacent une diapositive pour la disposer en repérage par rapport à la fenêtre de tirage 49, le rebord amont de la monture sur laquelle ces griffes prennent appui soit éloigné de l'axe optique 52 de l'objectif de tirage d'une distance d'environ 25,3 mm. On dispose une butée escamotable en aval de l'axe optique de l'objectif à environ 25,3 mm de manière à ce que, lorsque les griffes 43 déplacent une diapositive vers la fenêtre de tirage, le bord aval de la diapositive ne dépasse pas cette butée sous l'effet de son inertie. Un jeu suffisant subsiste entre la butée et la position extrême des griffes 43 pour que les montures ne soient pas écrasées et/ou endommagées par ces griffes. Le mécanisme d'entraînement des griffes comporte aussi un limiteur de couple qui évite en cas de coincement les dégats mécaniques et les marques trop accentuées sur les montures. Lorsqu'une diapositive est en position horizontale dans le cadre basculant et que

13

0008557

la place est disponible en position de tirage les griffes font un mouvement de va-et-vient pour, tout d'abord, prendre en charge la diapositive située dans le cadre basculant et la placer au poste de tirage puis ensuite revenir à leur position d'origine. Les griffes sont articulées sur des axes et leur partie arrière est inclinée de façon à ce que ces griffes passent, le cas échéant, par dessus la diapositive suivante pendant le mouvement de retour. En fin de retour les griffes tombent derrière la diapositive.

Un autre capteur permet d'empêcher le retour du cadre 41 en position verticale tant que le cadre maintient une diapositive. Ce capteur, en association avec un autre capteur détecte la présence ou l'absence de diapositive dans le poste de tirage, met en oeuvre le système de griffes lorsqu'une diapositive ne se trouve pas dans le poste de tirage ou lorsque la tireuse a terminé toutes les expositions relatives à la diapositive située dans le poste de tirage. Lorsqu'une diapositive ne se trouve plus dans le cadre basculant, ce dernier retourne à sa position initiale c'est-à-dire verticale, où il est prêt à recevoir une autre diapositive en vue de son analyse et de son transfert au poste de tirage.

Lorsqu'une diapositive pénètre dans le couloir de tirage, les mesures d'analyse, transformées en durées d'exposition, sont transférées au poste de tirage et les données emmagasinées dans un registre à décalage contenant la suite des nombres d'épreuves désirées se décalent d'un pas. De plus, on augmente d'une unité le contenu d'un compteur non représenté. Ce compteur, en association avec un comparateur, commande, lorsqu'il y a égalité avec le nombre de diapositives de l'ordre, la mise en oeuvre du dispositif de marquage de fin d'ordre sur le papier photosensible. Les marques 66 fournies par ce dispositif de marquages seront utilisées ultérieurement pour trier les épreuves. Le compteur prépare aussi l'évacuation des diapositives par la courroie sans fin.

Comme on l'a vu précédemment, le poste de tirage est muni d'un capteur qui détermine la présence ou l'absence des diapositives dans ce poste. Ce capteur permet, lorsque le nombre d'expositions désiré est atteint et que les expositions sont terminées, le mouvement des griffes 57 pour éjecter la diapositive du poste de tirage. L'introduction d'une nouvelle diapositive est obtenue par les griffes 43.

Les griffes 57 extraient les diapositives du poste de tirage. Cette paire de griffes 57 est solidaire de la paire de griffes 43 déplaçant les diapositives du cadre basculant vers le poste de tirage mais est placée en aval sur la trajectoire suivie par les diapositives. Cette paire de griffes déplace les diapositives du poste de tirage vers le poste d'évacuation lorsque la tireuse a terminé les diverses expositions relatives à une diapositive. Le poste d'évacuation est composé d'une courroie sans fin tendue entre deux cylin-

dres pouvant être mis en rotation par un moteur. Les diapositives extraites du poste de tirage viennent s'empiler à l'extrémité de la courroie jusqu'à ce que toutes les diapositives de l'ordre y soient entassées, ou jusqu'à ce que la pile 58 atteigne la hauteur maximale prévue qui dans le cas présent est de 4 cm. A ce moment, la courroie peut être mise en mouvement, grâce à un moteur 60, si les autres conditions autorisant l'évacuation sont remplies. L'ensemble des diapositives empilées sur la courroie parvient alors au godet 9 de réception disposé sur le tableau 8 de la tireuse. L'opérateur peut alors les ranger dans la pochette située sur la partie 4 de la table 101.

L'empilage des diapositives sur la courroie 59 entre le poste de tirage et le godet 9 donne de la souplesse à l'enchaînement des cycles de la tireuse. Même lorsque l'opératrice ne récupère pas immédiatement un ordre arrivé dans le godet 9 extérieur, la machine peut procéder, sans attendre, au tirage de l'ordre suivant. Les diapositives de l'ordre suivant sont alors empilées sur la courroie 59 à l'intérieur de la machine, sans venir se mélanger dans le godet 9 avec les diapositives de l'ordre précédent.

Le poste d'évacuation comprend un capteur permettant de savoir si la courroie 59 porte des diapositives. Ce capteur empêche que la courroie ne s'arrête après qu'elle a été mise en mouvement tant qu'il détecte la présence d'une diapositive sur cette courroie. Le poste d'évacuation comprend aussi un capteur pour déterminer le niveau "haut" de la pile de diapositives situées à l'extrémité de la courroie afin d'empêcher la formation d'une pile de diapositives trop haute pour être aisément manipulée. Ce capteur déclenche le déplacement de la courroie lorsque le niveau "haut" de la pile est atteint si les autres conditions d'évacuation sont remplies ou arrête momentanément le tirage dans le cas contraire.

On dispose un autre capteur dans le godet 9 de réception des diapositives de manière à empêcher la mise en oeuvre du moteur commandant le déplacement de la courroie tant que toutes les diapositives situées dans le godet n'ont pas été prélevées par l'opératrice. Ce capteur commande aussi le volet d'obturation du conduit de chargement de manière à ce que ce conduit ne soit ouvert pour le chargement d'un nouvel ordre que si, depuis la dernière action sur la touche "fin d'ordre" le godet 9 a été vidé. Dans ces conditions, l'opératrice ne peut pas introduire un troisième ordre si elle n'a pas rangé le premier ordre.

La tireuse comprend deux détecteurs distincts correspondant chacun à une pastille métallique 63 ou 64 localisées respectivement sur chacun des paniers en des endroits différents. La position différente des pastilles métalliques permet de repérer celui des paniers qui est situé dans le poste de chargement de manière à enregistrer la suite des nombres d'épreuves désirées pour chaque diapositive dans deux mémoires distinctes telles que par exemple deux registres à décalage. Les deux détecteurs sont portés par la section mobile 24 de manière à ce que lorsqu'un panier arrive en butée dans cette section mobile 24 la translation vers la gauche des sections mobiles 23 et 24 soit autorisée. Lorsque les sections mobiles sont revenues vers la gauche un autre détecteur indique qu'un panier se trouve en position de chargement et autorise l'ouverture du volet d'obturation. Un capteur situé dans le poste de chargement indique la présence ou l'absence d'un panier sur la section mobile 24 de manière à interdire le déplacement des sections mobiles 23 et 24 tant qu'un panier se trouve sur la section 24.

Comme on l'a vu précédemment, lorsque le chargement du panier au poste de chargement est terminé et que l'opératrice a appuyé sur la touche "fin d'ordre", le panier se déplace d'abord rapidement vers le poste de chargement puis ensuite ralentit afin d'éviter les chocs. Pour ce faire, on dispose un capteur qui indique que le panier arrive à la distance de ralentissement avant la butée, mentionnée précédemment, située au poste de déchargement.

D'une manière analogue, lors du retour d'un panier du poste de déchargement au poste de chargement par la piste retour, le déplacement de panier se fait tout d'abord rapidement puis ensuite ralentit avant d'arriver en butée contre la languette 61. Pour ce faire on dispose un autre capteur, non représenté, à une distance donnée de la languette 61. Ce capteur indique que le panier est arrivé à la distance de ralentissement.

La tireuse comprend aussi des capteurs qui permettent de déterminer la position du doigt basculant du premier mécanisme de déplacement ainsi que la position du doigt basculant du deuxième mécanisme de déplacement. Ces capteurs permettent d'empêcher le déplacement vers la gauche des sections mobiles tant que le doigt basculant du premier mécanisme de déplacement n'est pas baissé et d'empêcher la mise en oeuvre du premier mécanisme d'entraînement tant que le doigt n'est pas relevé. D'une manière analogue, l'autre capteur empêche le déplacement vers la droite des sections mobiles 23 et 24 tant que le doigt basculant du deuxième mécanisme de déplacement n'est pas baissé et la mise en oeuvre du deuxième mécanisme de déplacement vers l'avant tant que le doigt n'est pas relevé.

Avantageusement, le poste de chargement est muni d'un capteur qui indique la présence de diapositives dans le panier situé dans le poste de chargement. Ce détecteur est utilisé lors de la mise sous tension de la tireuse. Si la tireuse est mise "hors tension" alors qu'elle contient encore des diapositives, les instructions relatives à ces diapositives ne sont pas conservées par les mémoires. Il faut donc "vider" la tireuse sans faire de tirage lorsque l'on remet la tireuse sous tension. L'évacuation des diapositives présentes dans la tireuse lors de la mise sous tension est automatique, autrement dit les cycles commencent par s'enchaîner, sans exposition de papier, jusqu'à ce que tous les détecteurs soient dans l'état correspondant à l'absence de diapositives. Dans le cas où deux ordres se trouveraient dans la tireuse lors de la mise sous tension, l'ordre provenant du panier situé dans le poste de déchargement est d'abord évacué puis il se produit un échange de panier et le deuxième ordre est évacué séparément du premier.

Le clavier 11 est muni d'un bouton poussoir "récupération" qui permet à tout moment de récupérer les diapositives introduites dans la tireuse sans exposer le papier photosensible. Ce poussoir peut être actionné, par exemple si l'on s'aperçoit après chargement, d'une erreur de quantité. L'ordre peut ainsi être récupéré sans avoir été tiré. Le bouton poussoir "récupération" est mis en oeuvre pour faire passer le dernier ordre d'une séance de travail de l'extrémité de la courroie sans fin au godet récepteur 9.

La tireuse comprend aussi des capteurs pour détecter les positions des crémaillères des premier et deuxième mécanismes de déplacement des paniers afin d'inverser le sens de rotation et les fonctions des moteurs de ces premier et deuxième mécanismes de déplacement.

La tireuse comprend aussi des détecteurs indiquant la position des sections mobiles 23 et 24 de manière à savoir si ces sections mobiles sont alignées avec la piste "aller" ou la piste "retour" et à commander la mise en oeuvre de l'embrayage 31.

Dans un mode de réalisation préféré du clavier 11 de la tireuse, la quantité affichée reste valable pour les diapositives suivantes du même ordre tant qu'elle n'est pas modifiée par une nouvelle action sur le clavier.

Dans un mode de réalisation préféré de la tireuse, le nombre d'originaux et la quantité totale des épreuves de l'ordre apparaissent lorsque l'opératrice presse la touche "fin d'ordre". Cet affichage disparait quand on introduit la première diapositive de l'ordre suivant. Il n'y a ainsi pas de confusion possible sur l'ordre auquel l'affichage se rapporte : les valeurs affichées sont relatives au dernier ordre entièrement chargé. L'absence d'affichage indique que le chargement de l'ordre suivant est commencé et qu'on n'a pas encore appuyé sur la touche "fin d'ordre".

Pour empêcher l'opératrice d'introduire dans la tireuse un troisième ordre avant d'avoir procédé au rangement de l'ordre précédent, on maintient le volet d'obturation fermé jusqu'à ce que l'ordre à ranger ait été prélevé du godet 9.

Avant d'être évacuées dans le godet 9, les diapositives de l'ordre à ranger se sont empilées, au fur et à mesure de leur tirage, au fond de la courroie 59. Si la pile n'excède pas la hauteur disponible, elle est évacuée en une seule fois dans le godet 9. Dans le cas des ordres peu volumineux le moment de l'évacuation a été choisi correspondant aux trois conditions suivantes:

- l'ordre à évacuer est entièrement tiré ;

- l'ordre précédent est déchargé (godet vide) ;

- le chargement de l'ordre suivant ont commencé (une diapositive a été introduite dans la fente 13).

Lorsque le godet 9 contient la totalité d'un ordre, un voyant vert "fin d'ordre" s'allume. La tireuse est assez rapide pour que l'évacuation soit faite le plus souvent avant que l'opératrice ne soit prête à ranger. Pendant que l'ordre à ranger attend dans le godet 9, la tireuse commence à tirer les diapositives de l'ordre suivant qui s'accumulent au fond de la courroie sans venir se mélanger, par conséquent, avec les diapositives de l'ordre à ranger.

Lorsque l'opératrice a vidé le godet 9, le voyant vert s'éteint. Une des interdictions d'ouverture du conduit de chargement est donc supprimée. L'opératrice range l'ordre. Si le tirage de l'ordre suivant est terminé, il reste au fond de la courroie convoyeuse ; il ne sera dans le réceptacle de sortie, au plus tôt, qu'au moment où l'opératrice introduit la première diapositive d'une nouvelle pochette, c'est-à-dire largement après qu'elle ait fini de ranger. La possibilité de ranger par inadvertance deux ordres dans la même pochette ne se présente donc pas.

On peut aussi choisir comme troisième condition : le chargement de l'ordre suivant est terminé (action sur la touche "fin d'ordre" ). Cette variante accroît la sécurité mais rend le traitement des ordres importants (supérieurs à 30 diapositives) plus compliqué.

Le fond de la courroie convoyeuse et le réceptacle de sortie peuvent contenir des piles de diapositives n'excédant pas 4cm de hauteur. Si l'ordre est plus important, l'évacuation se fait en plusieurs fois ; une première pile de 4 cm est évacuée par la courroie sans fin dans le réceptacle , le voyant vert "fin d'ordre" ne s'allume pas, mais un clignotant rouge entre en action à côté du godet; une seconde pile de diapositives se constitue au fond de la courroie ; l'opératrice vide le réceptacle, le voyant rouge continue à clignoter, la seconde pile est évacuée ... Le voyant vert "fin d'ordre" ne s'illumine qu'après l'évacuation de la totalité de l'ordre, voyant rouge clignotant toujours. Les deux voyants s'éteignent quand l'opératrice a prélevé la totalité de l'ordre.

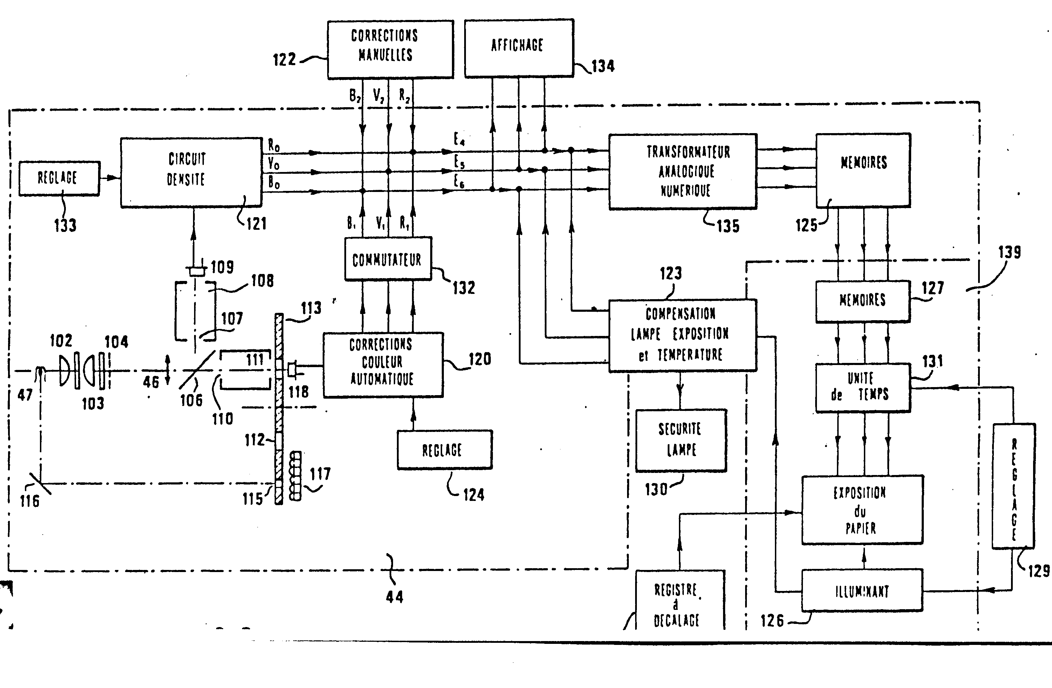

On va étudier maintenant plus en détail le fonctionnement du poste d'analyse 44 en se référant aux figures 3 à 9.

Le poste d'analyse 44 comprend, comme on le voit sur la figure 3, une source 47, un condenseur 102 et un filtre anticalorique 103 de manière à pouvoir irradier une diapositive 104 disposée, comme on l'a vu précédemment, dans le cadre 41 basculant. Un objectif de projection 46 forme, par l'inter-

18

0008557

médiaire d'un dispositif à dédoublement de faisceau 106, deux images de la diapositive. On forme les images de cette diapositive sur les fenêtres d'entrée 107 et 110 de deux dispositifs mélangeurs de lumière 108 et 111. On dispose une première photodiode 109 devant la fenêtre de sortie du dispositif 108 et une seconde photodiode 118 devant la fenêtre de sortie du dispositif 111.

Dans un mode de réalisation avantageux, la fenêtre d'entrée 107 du dispositif 108 empêche le flux reçu par la partie périphérique de l'image formée sur cette fenêtre d'entrée 107 de pénétrer dans le dispositif 108. Seul le flux passant par le quart central de l'image peut pénétrer dans le dispositif 108 pour irradier la photodiode 109. La photodiode 109 commande un circuit "densité" 121 permettant la détermination principale des durées d'exposition appelées aussi par la suite durées de base des expositions relatives au rouge, au vert et au bleu.

On dispose, entre la sortie du dispositif mélangeur de faisceau 111 et la photodiode 118, un disque 113 rotatif muni de filtres colorés 112. Le disque 113 est aussi muni de perforations 115 qui sont éclairées par la source 47, par l'intermédiaire d'un miroir 116, de manière à exciter tour à tour des phototransistors 117 placés de l'autre côté de la source par rapport au disque. Les positions des trous 115 et des phototransistors 117 sonttelles qu'un seul phototransistor est excité lorsqu'un filtre 112 est situé entre la fenêtre de sortie du dispositif 111 et la photodiode 118. La photodiode 118 est reliée à un circuit de correction couleur 120 qui apporte des corrections complémentaires dans les durées d'exposition rouge, verte et bleue. Ces corrections complémentaires permettent de modifier la détermination principale des durées d'exposition relatives à chaque couleur.

Comme on le voit sur la figure 3, le poste 44 comprend divers circuits permettant de calculer les durées d'exposition en fonction des densités neutre et chromatiques de l'original, puis de transformer l'information concernant ces durées d'exposition en une information digitale facile à enmagasiner dans des mémoires 125 de manière à pouvoir être utilisées ultérieurement par le poste de tirage 139. Le poste de tirage comprend une source 51 munie de filtres non représentés de manière à pouvoir régler la composition spectrale du faisceau de couleur et à obtenir un illuminant 126 que l'on peut régler en modifiant les filtres. Lorsque l'on transfère la diapositive du poste d'analyse 44 au poste de tirage, on transfère en même temps les informations concernant les durées d'exposition des mémoires 125 à des mémoires 127 de manière à pouvoir analyser un autre original et à exposer, simultanément, la diapositive située dans le poste de tirage le nombre de fois nécessaire pour obtenir le nombre d'épreuves désiré de cette diapositive. Comme indiqué précédemment, le nombre d'épreuves est emmagasiné dans un registre à décalage 128.

0008557

Pour obtenir un réglage aisé de la tireuse, on utilise un circuit 131 fournissant une unité de temps dont on peut modifier la durée au moyen d'un circuit de réglage 129. Les durées d'exposition correspondent à des multiples de cette unité de temps. Les organes du circuit de réglage 129 permettent aussi de faire varier l'illuminant 126 en agissant sur les filtres non représentés.

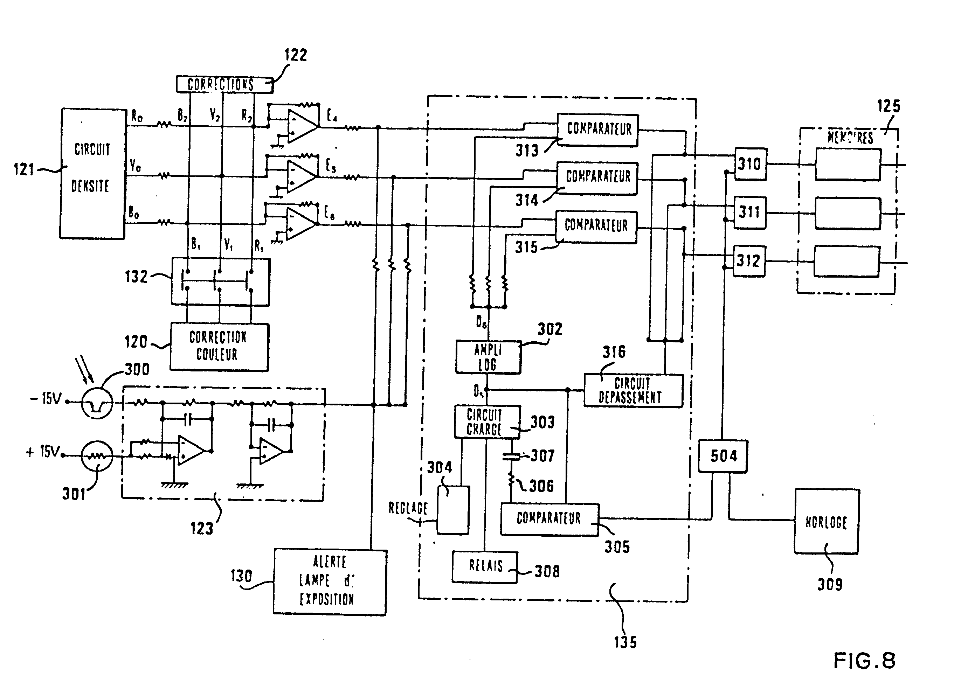

Avantageusement, la tireuse comprend un circuit 123 de compensation de lampe d'exposition et de température représenté plus en détail à la figure 8. Ce circuit permet d'apporter de petites modifications aux durées d'exposition en fonction des variations possibles de l'illuminant 126. Le circuit 123 peut aussi comprendre un circuit 130 de sécurité de la lampe d'exposition qui arrête la tireuse lorsque la lampe d'exposition ne fonctionne plus de manière correcte. Ce circuit de sécurité peut exciter un voyant indicateur disposé sur le tableau 8 de la tireuse pour signaler la cause de la panne.

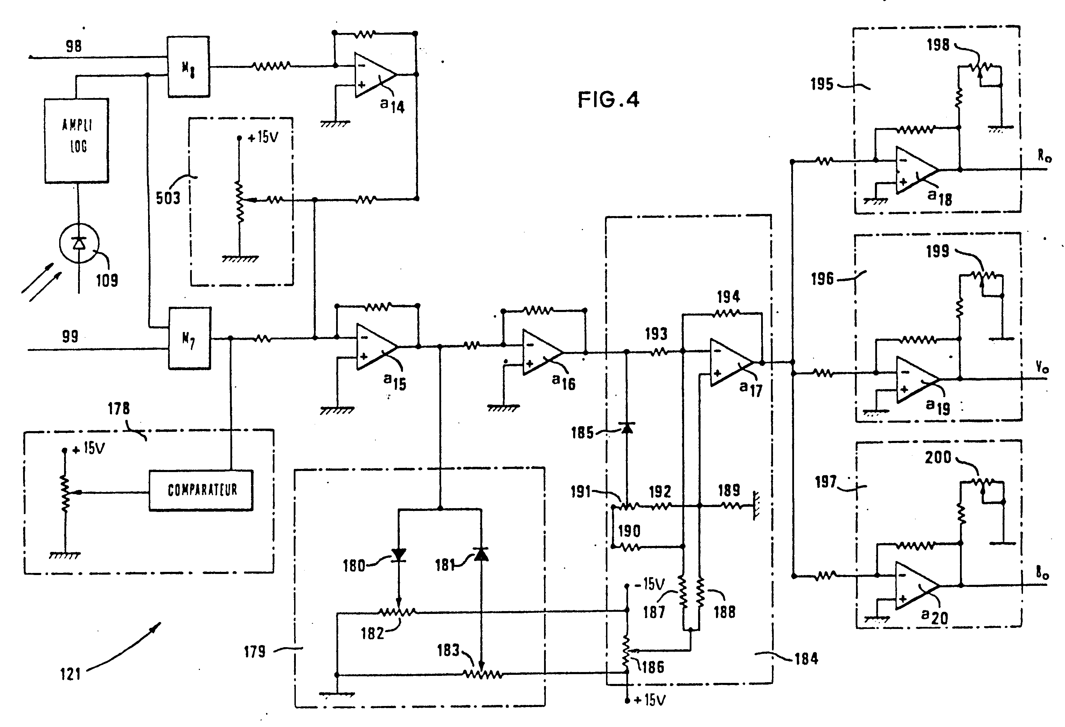

Le poste d'analyse 44 comprend le circuit densité 121 fournissant les durées de base des durées d'exposition. On peut ajuster ces durées par des dispositifs de réglage 133. Le circuit 121 reçoit les informations de la photodiode 109 par l'intermédiaire des mémoires M7 et M8 représentées à la figure 4 dans lesquelles on a enregistré les informations concernant la lampe d'analyse et la valeur de densité LATD neutre de la diapositive. Il les transforme en fonction des réglages en trois signaux $R_0$, $V_0$ et $B_0$ représentant les durées de base des expositions respectivement, rouge, verte et bleue. Le poste d'analyse comprend aussi un circuit annexe 120 de correction automatique des couleurs. Ce circuit délivre trois signaux $R_1$, $V_1$ et $B_1$ de correction complémentaires qui sont normalement additionnés aux signaux représentant les durées de base des expositions. Des commutateurs 132 permettent cependant la suppression volontaire des corrections de couleur. Avantageusement l'ouverture des commutateurs 132 excite un voyant lumineux, non représenté, disposé sur le tableau 8 de la tireuse. Un circuit de réglage 124 comprenant des éléments de réglage permet d'adapter les caractéristiques du circuit 120 à l'effet photographique recherché.

La tireuse comprend un clavier de correction 11 qui permet d'exciter un circuit de corrections manuelles 122 et d'apporter, par l'intermédiaire de signaux $R_2$, $V_2$ et $B_2$, d'autres corrections complémentaires aux signaux représentant les durées des expositions relatives au rouge, au vert et au bleu.

Avantageusement, on prévoit un dispositif d'affichage 134 qui permet d'afficher notamment les informations relatives aux durées d'expositions rouge, verte et bleue. Ce dispositif peut être un voltmètre numérique de tableau

Dans le mode de réalisation représenté, on utilise des signaux analogiques logarithmiques qui sont ensuite transformés par un circuit 135 en

20

0008557

durées arithmétiques puis en signaux numériques avant d'être emmagasinés dans les mémoires 125.

On va tout d'abord étudier le circuit densité 121 qui fournit les signaux de base $R_0$, $V_0$ et $B_0$ correspondant aux durées de base d'exposition.

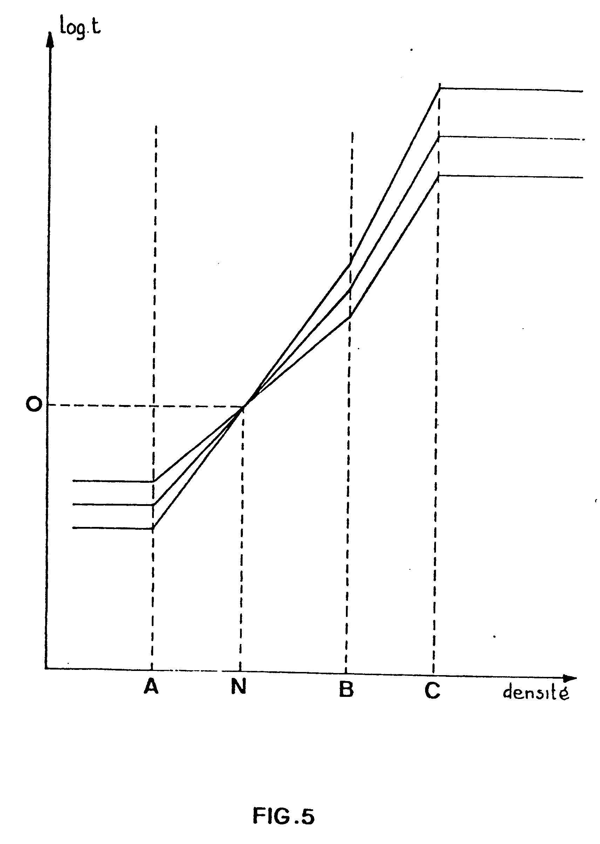

La figure 4 représente en détail le circuit de densité 121 et la figure 5 la forme de la relation entre les signaux engendrés par ce circuit et l'information fournie par la photodiode 109.

Dans la technique antérieure, on utilise en général des signaux représentatifs des durées d'exposition dont les logarithmes sont une fonction linéaire de la densité moyenne neutre de l'original qui dans le cas présent est une diapositive, cette fonction log t = f(d) est représentée par une droite.

On a remarqué que l'on obtient des tirages corrects des originaux très denses et des originaux peu denses ou légers en utilisant des temps d'exposition constants. Par exemple pour les diapositives dont la densité moyenne est supérieure à 1,8 (point C, figure 5) on utilise des durées d'exposition constantes relativement longues quelle que soit la densité et, pour des diapositives dont la densité moyenne est inférieure à 0,45 (point A, figure 5), des durées d'exposition constantes relativement courtes. Entre ces limites, le signal représentatif de la fonction log t = f(d) est représenté par une droite et, avantageusement, par deux segments de droite de pentes différentes comme représenté à la figure 5.

On utilisera de préférence des temps de pose identiques pour une diapositive de référence (densité moyenne représentée par le point N de la figure 5) et, comme indiqué précédemment, on règle l'illuminant en fonction du papier photosensible utilisé pour obtenir de cette diapositive la reproduction photographique désirée. La condition d'égalité des temps de pose est représentée par le point d'intersection de trois courbes rouge, verte et bleue, représentatives du logarithme des durées d'exposition en fonction de la densité des originaux (figure 5).

Le circuit 121 reçoit l'information concernant la densité de la photodiode 109. Comme on l'a vu précédemment, les informations représentant les logarithmes des durées d'exposition en fonction des densités des originaux sont représentées par des portions de droites. Pour ce faire, on relie la sortie de la photodiode 109 à l'entrée d'un amplificateur logarithmique qui fournit à sa sortie un signal logarithmique fonction du signal de densité. On emmagasine les informations fournies par la photodiode 109 concernant la lampe d'analyse dans une mémoire analogique $M_7$, juste avant l'introduction de la diapositive dans le cadre basculant 41. La mémoire $M_7$ est mise en position "enregistrement" par l'intermédiaire d'un conducteur 99 grâce à une logique, non représentée.

21

0008557

Les informations fournies par la photodiode 109 concernant la densité moyenne neutre de la diapositive sont enregistrées dans la mémoire analogique $M_8$. La mémoire $M_8$ est mise en position "enregistrement" lorsque la diapositive est située dans le cadre basculant 41 par l'intermédiaire d'un conducteur 98 reliant la mémoire $M_8$ à la logique.

Les signaux emmagasinés dans les mémoires $M_7$ et $M_8$ sont alors combinés grâce à des amplificateurs opérationnels $a_{14}$ et $a_{15}$, avec un signal issu des dispositifs de réglage 133. Ce signal provient d'un circuit de réglage 503 qui est constitué principalement d'un potentiomètre relié par une borne à une source de potentiel de +15V et par l'autre borne à la masse. Le signal issu de l'amplificateur $a_{15}$ est donc représentatif de :

mesure sur l'original - mesure sur la lampe d'analyse + constante dans laquelle la constante est choisie pour que l'origine des logarithmes des durées d'exposition corresponde au logarithme des durées d'exposition utilisées pour la diapositive de référence. Les durées d'exposition correspondant à la diapositive de référence correspondent donc à des durées d'exposition unité, et les durées d'exposition sont proportionnelles à cette durée unité. On obtient le réglage de l'origine des logarithmes des durées d'exposition en agissant sur le potentiomètre du circuit 503 de manière à obtenir un signal nul à la sortie de l'amplificateur $a_{15}$ lorsqu'on introduit la diapositive de référence dans le poste d'analyse 44.

Comme indiqué, on utilise des durées d'exposition constantes pour les originaux légers et pour des originaux très denses. Pour obtenir ces deux limites et compte tenu de l'origine que l'on a choisie pour les logarithmes des durées d'exposition, on aura une valeur de logarithme négative pour les diapositives dont la densité moyenne est très faible et une valeur de logarithme positive pour les diapositives dont la densité moyenne est très forte. Pour obtenir l'écrêtement des signaux à la sortie de l'amplificateur opérationnel $a_{15}$, on utilise un circuit 179 comprenant deux diodes 180, 181 qui sont montées en parallèle et en opposition, l'une est polarisée négativement par l'intermédiaire d'un potentiomètre 182 et l'autre est polarisée positivement par un potentiomètre 183. Lorsque le courant à la sortie de l'amplificateur est trop négatif ou trop positif la diode 180 ou 181 se met à conduire écrêtant ainsi le signal.

Dans ces conditions, le signal parvenant à l'entrée négative d'un amplificateur opérationnel $a_{16}$ est compris entre deux valeurs limites, l'une positive et l'autre négative, qui peuvent être réglées en ajustant les potentiomètres 182 et 183.

Dans le mode de réalisation préféré pour le poste d'analyse, on utilise des courbes, représentant les valeurs du logarithme des durées d'exposition en fonction de la densité moyenne de la diapositive, analogue à celles représentées sur la figure 5 c'est-à-dire comprenant une ligne brisée dans l'intervalle des densités où la courbe log t = f (d) varie.

Pour obtenir cette ligne brisée, on utilise un circuit 184 comprenant un amplificateur opérationnel $a_{17}$ dont l'entrée négative est reliée à la sortie de l'amplificateur $a_{16}$ par l'intermédiaire d'une résistance 193. On dispose une résistance de contre réaction 194 en parallèle avec l'amplificateur $a_{17}$ entre la sortie et l'entrée négative de cet amplificateur. L'entrée positive de l'amplificateur $a_{17}$ est reliée à la masse par l'intermédiaire d'une résistance 189 et à une source de potentiel V obtenue au moyen d'un potentiomètre 186 dont les bornes sont reliées d'une part à -15V, d'autre part à +15V, par l'intermédiaire d'une résistance 188. Cette source de potentiel est aussi reliée à l'entrée négative de l'amplificateur $a_{17}$ par l'intermédiaire d'une résistance 187. Comme on peut le voir sur la figure 4, l'entrée négative de l'amplificateur $a_{17}$ est reliée à l'entrée positive par l'intermédiaire d'une résistance 190, d'un potentiomètre 191 et d'une autre résistance 192. La sortie variable du potentiomètre 191 est reliée à la sortie de l'amplificateur opérationnel $a_{16}$ par l'intermédiaire d'une diode 185.

On choisit les impédances des résistances 187 à 194 de manière que, lorsque le signal sortant de l'amplificateur $a_{16}$ est supérieur à une valeur donnée et que la diode 185 ne conduit pas, le circuit 184 fonctionne comme un inverseur. Dans ces conditions, les potentiels aux sorties des amplificateurs $a_{16}$ et $a_{17}$ sont opposés. Lorsque le signal d'entrée du circuit 184, qui est aussi le signal de sortie de l'amplificateur opérationnel $a_{16}$, est inférieur à une valeur déterminée, la diode 185 se met à conduire. Lorsqu'on fait varier le réglage du potentiomètre 191 on agit sur la pente de la droite fournissant les valeurs du logarithme des durées d'exposition en fonction de la densité moyenne de la diapositive pour des valeurs de densité comprises entre une valeur inférieure (point B, figure 5) et la valeur supérieure choisie précédemment à partir de laquelle les durées d'exposition sont constantes (point C, figure 5). Le potentiomètre 126 agit sur la position du point B de la figure 5. Les valeurs des résistances du circuit 194 sont choisies pour que ces deux réglages n'aient pas d'action sur les portions de courbes correspondant aux valeurs de densité inférieures à la valeur représentée par le point B de la figure 5.

Le signal de sortie du circuit 184 est envoyé à trois circuits pratiquement identiques respectivement rouge 195, vert 196 et bleu 197. Chacun de ces circuits comprend un amplificateur opérationnel $a_{18}$, $a_{19}$ et $a_{20}$ respectivement dont l'entrée positive est reliée à la masse et dont l'entrée négative reçoit le signal de sortie du circuit 184 par l'intermédiaire d'une résistance.

Le coefficient d'amplification de chacun de ces trois amplificateurs est réglé de manière à obtenir la pente déterminée pour les signaux rouge, vert et bleu représentés sur la figure 5. Le réglage du coefficient d'amplification peut s'obtenir soit par une résistance de contre-réaction variable soit., comme représenté au dessin, par une résistance de contre-réaction constante et en reliant la sortie de l'amplificateur opérationnel à la masse par l'intermédiaire d'une résistance variable 198, 199 et 200. On obtient ainsi, à la sortie du circuit 195 un signal $R_0$ représentatif de la durée de base d'exposition en rouge, à la sortie du circuit 196 un signal $V_0$ représentatif de la durée de base d'exposition en vert et à la sortie du circuit 197 un signal $B_0$ représentatif de la durée de base d'exposition en bleu.

Avantageusement on relie la sortie de la mémoire $M_7$ à un circuit d'alerte 178 de la lampe d'analyse. Ce circuit comprend un comparateur qui compare la tension de sortie de la mémoire $M_7$ à un potentiel de référence pour indiquer au moyen d'un voyant lumineux non représenté lorsque la lampe d'analyse ne fonctionne plus correctement. Le comparateur arrête aussi le fonctionnement de la tireuse.

Comme on le voit sur la figure 3 on peut ajouter ensuite à ces signaux $R_0$, $V_0$ et $B_0$ des corrections complémentaires obtenues par les circuits 120 et 122.

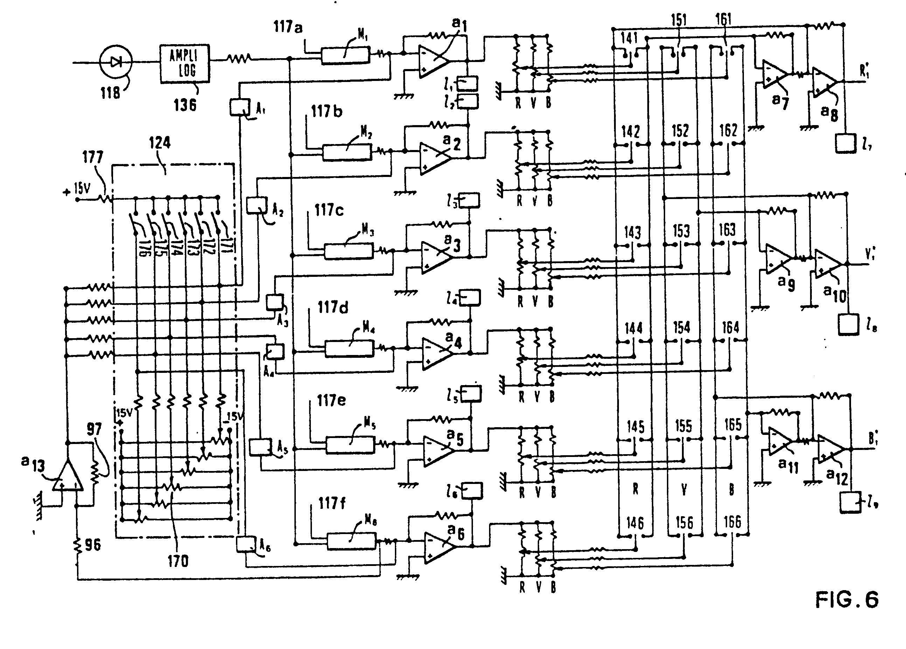

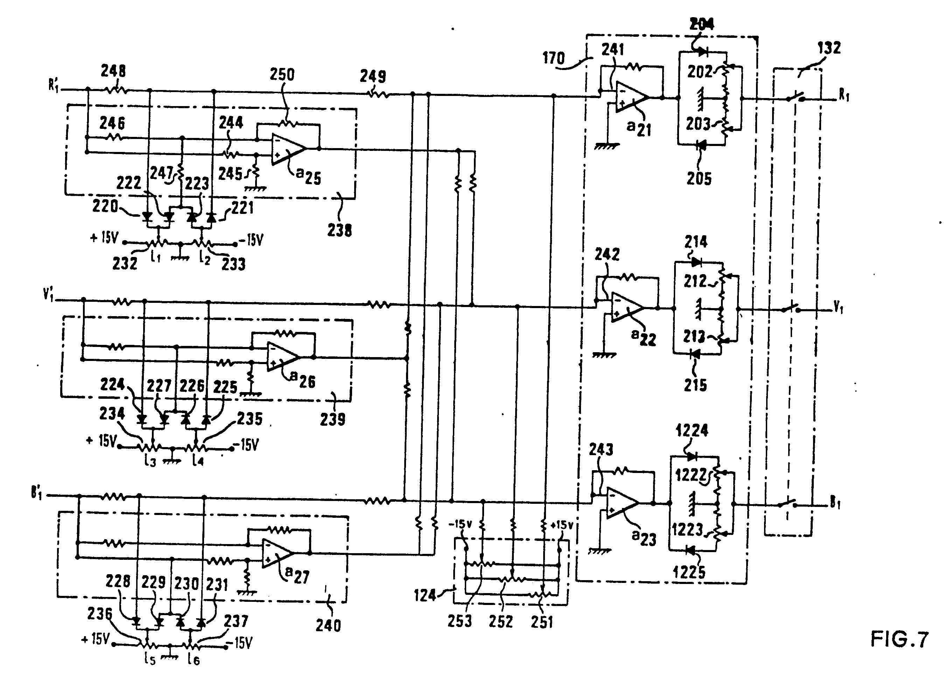

On étudie maintenant le circuit annexe 120 de correction de couleur qui est représenté plus en détail aux figures 6 et 7.

Ce circuit 120 reçoit l'information couleur à partir de la photodiode 118 qui se trouve derrière le disque 113 des filtres. Le signal issu de la photodiode 118 est transformé en un signal logarithmique par un amplificateur logarithmique 136 avant d'être emmagasiné dans des mémoires analogiques $M_1$ à $M_6$ en synchronisme avec le passage du filtre correspondant devant la photodiode 118. La synchronisation de l'enregistrement des mémoires avec le passage des filtres devant la photodiode 118 est obtenue par des conducteurs 117a à 117f reliant par l'intermédiaire d'une logique non représentée, les photo-transistors 117 aux mémoires $M_1$ à $M_6$.

Dans un mode de réalisation préféré, on utilise comme filtre correspondant à la mémoire $M_1$ un filtre rouge tel que par exemple un filtre Kodak Wratten 24 associé à une densité neutre de 1,30, comme filtre correspondant à la mémoire $M_2$, un filtre bleu tel que par exemple un filtre Kodak Wratten 47 B associé à une densité neutre de 0,30, comme filtre correspondant à la mémoire $M_3$, un filtre vert tel que par exemple un filtre Kodak Wratten 13 superposé à un filtre Kodak Wratten 53 et comme filtre correspondant à la mémoire $M_6$ une densité neutre de densité 1,70. De plus, on dispose entre la source 47 et les photodiodes , une filtration générale constituée de deux

0008557

filtres Arthevex de la Société MTO réfléchissant et absorbant l'infrarouge, un filtre Kodak infrarouge 301, un filtre Kodak CC 50C et un filtre Kodak CC 50B. Dans ce mode de réalisation les circuits correspondant aux mémoires $M_4$ et $M_5$ ne sont pas utilisés. Ceci permet d'obtenir avec la tireuse suivant l'invention des épreuves acceptables pour les diapositives de toutes marques courantes lorsqu'on utilise des filtres de tirage jaune, magenta et cyan analogues à ceux utilisés sur les tireuses couleurs Kodak 2620 et une surface photosensible de reproduction constituée de papier Kodak Ektachrome 14 RC.

Avec d'autres types de papier ou pour des marques particulières de diapositives il peut être avantageux d'utiliser des filtres différents. On dispose alors des emplacements correspondant aux mémoires $M_4$ et $M_5$ pour passer, au moyen des commutateurs décrits plus loin, d'une combinaison de filtres à une autre. Il peut aussi être avantageux d'utiliser simultanément un nombre de filtres différents de trois, soit inférieur, soit supérieur. On utilise par exemple deux filtres rouges, l'un correspondant à la mémoire $M_1$ et l'autre à la mémoire $M_4$, tels que la superposition des signaux correspondant conduise à des corrections différentes pour des diapositives d'une première marque et pour des diapositives d'une deuxième marque.

Comme on le voit sur la figure 6, chacune des sorties des mémoires est reliée, par l'intermédiaire d'une impédance déterminée, à l'entrée négative d'un amplificateur opérationnel $a_1$ à $a_6$ dont l'entrée positive est reliée à la masse. On dispose une résistance de contre-réaction en parallèle avec l'amplificateur entre la sortie et l'entrée négative de cet amplificateur.

Comme on l'a vu précédemment, le signal obtenu dans la mémoire $M_6$ est relatif à un signal "neutre". On le retranche des signaux appliqués à l'entrée des amplificateurs $a_1$ à $a_5$. Pour ce faire, on utilise un amplificateur opérationnel $a_{13}$ dont l'entrée négative est reliée à la sortie de la mémoire $M_6$ par l'intermédiaire d'une résistance 97 et dont l'entrée positive est reliée à la masse. On dispose en parallèle sur cet amplificateur $a_{13}$ une résistance 96 de contre-réaction entre la sortie de cet amplificateur et l'entrée négative. Les impédances des résistances 96 et 97 sont choisies de manière que l'amplificateur $a_{13}$ fonctionne comme un inverseur. La sortie de l'amplificateur $a_{13}$ est reliée à l'entrée négative de chacun des amplificateurs $a_1$ à $a_5$.

Comme indiqué précédemment, la tireuse est réglée par le réglage de l'illuminant et de l'unité de temps et on choisit un réglage de la tireuse, en agissant sur la composition spectrale de l'illuminant tel que, lorsqu'on introduit une diapositive présentant une densité moyenne neutre de référence, le tirage de cette diapositive soit obtenu par une même durée de pose pour les couleurs rouge, verte et bleue. Le réglage du circuit 120 de correction couleur doit donc être tel que lorsqu'on introduit l'original de référence dans le poste d'analyse, ce circuit 120 fournisse des signaux de correction nuls pour les trois couleurs, rouge, verte et bleue. Pour ce faire on utilise un réseau de potentiomètre 170 relié en parallèle entre une borne présentant un potentiel de -15V et une borne présentant un potentiel de +15V. Comme représenté à la figure 6, chacun de ces potentiomètres du réseau 170 est relié à l'entrée négative de l'un des amplificateurs $a_1$ à $a_6$ de manière à pouvoir injecter dans ces amplificateurs des courants $A_1$ à $A_6$ tels que les potentiels aux points $z_1$ à $z_6$ soient nuls pour l'original de référence.

Les amplificateurs $a_1$ à $a_5$ effectuent donc finalement les opérations suivantes :

Densité lue à travers un filtre coloré

- densité lue à travers le filtre neutre

+ constante réglée pour que le total soit nul dans le cas de la diapositive de référence.

De cette manière, lorsqu'on présente dans l'analyseur une diapositive de densités différentes de celles de la diapositive de référence, les potentiels à la sortie des amplificateurs $a_1$ à $a_5$ restent nuls si la diapositive présentée est de même balance de couleur que l'original de référence et ne nécessite donc pas de correction de couleur, ou prennent des valeurs différentes de zéro si la diapositive présente un déséquilibre de couleur.

Comme on le voit sur la figure 6, la sortie de chaque amplificateur $a_1$ à $a_6$ alimente un réseau de résistance à trois branches R, V et B munies chacune d'un potentiomètre. Chacun des potentiomètres permet de prélever une proportion déterminée fonction de son réglage, du potentiel de sortie de l'amplificateur $a_1$ à $a_6$ correspondant.

Toutes les branches R peuvent être reliées par l'intermédiaire de commutateurs 141 à 146 soit à l'entrée négative d'un amplificateur opérationnel $a_7$ dont l'entrée positive est reliée à la masse, soit à l'entrée négative d'un amplificateur opérationnel $a_8$ dont l'entrée positive est reliée à la masse, soit à aucun de ces deux amplificateurs suivant la position des commutateurs 141 à 146. Il est évident que l'un quelconque ou plusieurs commutateurs 141 à 146 peuvent rester ouverts.

La sortie de l'amplificateur $a_7$ est reliée par l'intermédiaire d'une résistance à l'entrée négative de l'amplificateur $a_8$. On dispose une résistance de contre-réaction en parallèle sur chacun des amplificateurs $a_7$ et $a_8$. La sortie de l'amplificateur $a_8$ délivre un signal $R'_1$ qui est fonction de tous les signaux de couleurs contenus dans les mémoires $M_1$ à $M_6$ reliées aux amplificateurs $a_7$ ou $a_8$ par les commutateurs 141 à 146.

D'une manière analogue les branches vertes sont reliées à des ampli-

ficateurs $a_9$ et $a_{10}$ par l'intermédiaire de commutateurs 151 à 156 pour donner un signal $V'_1$ et les branches bleues B sont reliées à des amplificateurs opérationnels $a_{11}$ et $a_{12}$ par l'intermédiaire de commutateurs 161 à 166 pour donner un signal $B'_1$.

Dans un mode de réalisation préféré, on peut connaître les coefficients de matrice, déterminés par la position des potentiomètres de chacune des branches, en reliant la sortie $Z_7$, $Z_8$ et $Z_9$ des amplificateurs $a_8$, $a_{10}$ et $a_{12}$ au dispositif d'affichage 134 qui mesure le potentiel. On peut régler les potentiels à une valeur déterminée en fermant l'un des commutateurs 171 à 176 ce qui envoie un courant unité à l'entrée négative des amplificateurs opérationnels $a_1$ à $a_6$. Par exemple, si l'on ferme le commutateur 171 et le commutateur 141, on peut, en agissant sur le potentiomètre correspondant du réseau relié à l'amplificateur $a_1$ obtenir le potentiel désiré en $Z_7$. La valeur de ce potentiel représente le coefficient de la matrice.

Dans le mode de réalisation préféré, les commutateurs 144, 145, 154, 155, 164, 165, 146, 156 et 166 sont ouverts et on peut utiliser comme coefficients de la matrice les valeurs suivantes :

|        |         |         |
|--------|---------|---------|
| 1,04   | - 0,82  | - 0,4   |
| - 0,65 | + 1,07  | - 0,51  |
| - 0,20 | - 0,60  | + 1,06  |

L'interprétation de ces coefficients est la suivante : une diapositive qui présenterait un excédent de densité lue à travers le filtre rouge, correspondant à la mémoire $M_1$, c'est-à-dire une diapositive d'apparence bleu-vert prononcée, serait affectée d'une augmentation de son temps de pose de base rouge de 1,04 unité logarithmique, alors que son temps de pose vert serait diminué de 0,82 unité et son temps de pose bleu diminué de 0,4 unité. Inversement, une diapositive rouge aurait son temps de pose rouge diminué et les deux autres augmentés. De la même façon, les coefficients des deuxième et troisième lignes sont relatifs respectivement à l'incidence des déséquilibres de coloration vert (ou magenta) et bleu (ou jaune) sur les trois temps de pose.

Les corrections ainsi calculées ne sont encore que provisoires. On a en effet remarqué que l'on améliore les épreuves obtenues si l'on utilise des taux de correction distincts non seulement pour le rouge, le vert et le bleu mais aussi pour les couleurs complémentaires, c'est-à-dire le bleu-vert ou cyan, le magenta et le jaune. Pour ce faire, on utilise un circuit "Taux de correction" 170.

Le signal $R'_1$ est transmis par l'intermédiaire de deux résistances 248, 249 en séries à l'entrée négative 241 d'un amplificateur opérationnel $a_{21}$ dont l'entrée positive est reliée à la masse et qui est munie d'une résistance de contre-réaction reliant la sortie à l'entrée négative. Comme on le voit

sur la figure 7, la sortie de l'amplificateur $a_{21}$ est reliée à la masse par deux voies distinctes, l'une correspondant au rouge et l'autre correspondant au bleu-vert ou cyan ; chaque voie possède une résistance, un potentiomètre (202, 203) et une diode (204, 205) en série. Les deux diodes 204, 205 sont en opposition afin de transmettre les signaux positifs par une voie et les signaux négatifs par l'autre voie. Les potentiomètres 202, 203, permettent de prélever le signal $R_1$ et les deux voies permettent d'avoir des taux de correction distincts pour le rouge et le cyan.

D'une manière analogue, le signal $V'_1$ est transmis par l'intermédiaire de deux résistances en séries à l'entrée négative 242 d'un amplificateur opérationnel $a_{22}$ dont l'entrée positive est reliée à la masse qui est munie d'une résistance de contre-réaction reliant la sortie à l'entrée négative. La sortie de l'amplificateur $a_{22}$ est reliée à la masse, d'une manière analogue à celle de l'amplificateur $a_{21}$, par deux voies distinctes présentant chacune, en série, une résistance, un potentiomètre (212,213) et une diode (214,215). Les deux voies permettent de prélever le signal $V_1$ et d'obtenir des taux de correction différents pour le vert et le magenta.

Un amplificateur opérationnel $a_{23}$, relié d'une manière analogue à celle des amplificateurs opérationnels $a_{21}$ et $a_{22}$, permet d'alimenter deux voies munies chacune d'une diode (1224, 1225) et d'un potentiomètre (1222, 1223) Les potentiomètres 1222 et 1223 permettent à partir du signal $B'_1$ parvenant à l'entrée négative de l'amplificateur opérationnel $a_{23}$, de prélever le signal $B_1$ et d'obtenir des taux de correction distincts pour le bleu et pour le jaune.

Dans un mode de réalisation préféré on peut utiliser les taux de correction suivants :

Rouge : 1,9    Vert : 1,0    Bleu : 1,4

Cyan : 1,4    Magenta : 1,9    Jaune : 0,9

On peut remarquer que l'utilisation des coefficients multiplicateurs appelés ici "taux de correction" est équivalente à l'utilisation de plusieurs matrices correspondant chacune à une combinaison des signes des déséquilibres de couleur de la diapositive à tirer et que le terme employé de "taux de correction" n'a pas le sens qui lui est habituellement attribué dans la technique photographique.

Pour permettre l'utilisation de "taux de correction" assez élevés afin de compenser efficacement les dominantes légères ou moyennes sans pour autant obtenir des corrections trop importantes pour des diapositives correspondant à des scènes très colorées, ce qui les dénatureraient de façon excessive, on utilise des circuits de limitation représentés en détail à la figure 7.

On limite le signal $R'_1$ entre deux valeurs, l'une positive et l'autre négative, en utilisant deux diodes 220 et 221. La diode 220 est polarisée

positivement par un potentiomètre 232, relié à un potentiel de +15V d'une part et à la masse d'autre part, afin de fournir une limite de potentiel $L_1$ au-dessus de laquelle elle devient conductrice. La diode 221 est polarisée négativement par un potentiomètre 233 relié à un potentiel de -15V d'une part et à la masse d'autre part, afin de fournir une limite de potentiel $L_2$ au-dessus de laquelle elle devient conductrice.

On limite le signal $V'_1$ entre deux valeurs, l'une positive et l'autre négative, en utilisant deux diodes 224 et 225 polarisées l'une positivement par un potentiomètre 234, l'autre négativement par un potentiomètre 235 qui sont reliées d'une manière analogue à celle des potentiomètres 232 et 233 respectivement. La diode 223 fournit une limite $L_3$ et la diode 225 fournit une limite $L_4$.

D'une manière analogue, deux diodes 228 et 229 reliées chacune à un potentiomètre 236 et 237 respectivement fournissent les limites $L_5$ et $L_6$ positives et négatives entre lesquelles on limite le signal $B'_1$.

Comme il est bien connu en tirage photographique, si on limite l'une des durées d'exposition, on modifie l'équilibre chromatique de l'épreuve par rapport à celui de la diapositive. Afin de ne pas changer l'équilibre, on "réinjecte" un signal correspondant à la moitié du signal excédentaire provenant du signal qui a été limité par l'une des diodes, sur les deux autres canaux. Pour ce faire, on utilise trois circuits 238, 239 et 240 qui reçoivent respectivement les signaux $R'_1$, $V'_1$ et $B'_1$.

Le circuit 238 comprend un amplificateur opérationnel $a_{25}$ dont la sortie est reliée à l'entrée négative 242 de l'amplificateur $a_{22}$ par l'intermédiaire d'une résistance 251 d'une part et à l'entrée négative 243 de l'amplificateur $a_{23}$ par l'intermédiaire d'une résistance 252. L'amplificateur opérationnel est muni d'une résistance 250 de contre-réaction reliant la sortie à l'entrée négative de cet amplificateur. L'entrée positive de l'amplificateur $a_{25}$ reçoit le signal $R'_1$ par l'intermédiaire d'une résistance 244 et est reliée à la masse par une autre résistance 245 de même impédance que la résistance 244. L'entrée négative reçoit le signal $R'_1$ par l'intermédiaire d'une résistance 246 et est reliée au potentiomètre 232 par l'intermédiaire d'une diode 222 d'une part, et au potentiomètre 233 par l'intermédiaire d'une diode 223 d'autre part, par l'intermédiaire d'une résistance 247 de même impédance que la résistance 246. Lorsque le potentiel du signal $R'_1$ est situé dans l'intervalle correspondant aux limites $L_1$ et $L_2$, les diodes 222 et 223 sont bloquées et aucun courant ne passe par la résistance 247. Lorsque le potentiel du signal $R'_1$ est situé en dehors de l'intervalle correspondant aux limites $L_1$ et $L_2$, l'une des deux diodes 222 ou 223 devient passante. On choisit les impédances des résistances 244 à 252 de manière que le circuit 238 délivre un signal proportionnel

29

0008557

à la moitié du signal excédentaire.

Les circuits 239 et 240 sont analogues au circuit 238 et sont munis chacun d'un amplificateur opérationnel $a_{26}$, $a_{27}$ dont les sorties sont reliées l'une aux entrées 241 et 243 des amplificateurs $a_{21}$ et $a_{23}$ et l'autre aux entrées 241 et 242 des amplificateurs $a_{21}$ et $a_{22}$ respectivement.

Si, par exemple, pour une diapositive déterminée on obtient des signaux $R'_1$, $V'_1$ et $B'_1$ qui correspondent à des modifications de +0,50, -0,25 et -0,25 unité logarithmique des temps de pose respectivement en rouge, en vert et en bleu et que toutes les limitations $L_1$ à $L_6$ sont égales à ± 0,30 V, les circuits 170, 238, 239 et 240 fournissent les signaux $R_1$, $V_1$ et $B_1$ correspondants à des modifications de +0,30, -0,15 et -0,15 unité logarithmique du temps de pose respectivement en rouge, en vert et en bleu.

Pour pouvoir utiliser des amplificateurs opérationnels peu coûteux et n'ayant pas de compensation de zéro, on utilise un circuit de réglage 124 permettant d'envoyer des petits courants aux entrées 241, 242 et 243 des amplificateurs $a_{21}$, $a_{22}$ et $a_{23}$ et obtenir des signaux $R_1$, $V_1$ et $B_1$ nuls lorsque la diapositive de référence se trouve dans le poste d'analyse.

Les signaux issus du circuit 120 sont additionnés à ceux issus du circuit 121, lorsque les commutateurs 132 sont fermés, pour donner des signaux $E_4$, $E_5$ et $E_6$ représentatifs des durées d'exposition en rouge, en vert et en bleu. Avantageusement, on peut afficher ces signaux au moyen du dispositif d'affichage 134.

Dans un mode de réalisation préféré de la tireuse, on examine en perm nence la lampe d'exposition en utilisant un phototransistor 300 et une thermis tance 301 pour compenser la température. Les signaux issus de ces éléments sont combinés, de la manière représentée à la figure 8, par un circuit 123 de manière à obtenir un signal de compensation lampe. Ce signal est comparé à une tension de référence par un circuit d'alerte 130 afin d'arrêter le fonctionnement de la tireuse lorsque l'évolution de la lampe d'exposition est trop importante.

Les informations relatives aux durées d'exposition sont alors trans- formées en informations numériques par le circuit 135. Le circuit 135 comprend un amplificateur logarithmique 302 fournissant un signal de sortie $D_6$ qui décroît logarithmiquement en fonction du temps et un circuit de charge 303 fournissant un signal $D_5$ qui croît linéairement en fonction du temps. Le signal $D_5$ est obtenu par la charge d'un condensateur. Pour éviter la saturation de l'amplificateur logarithmique, au lieu d'utiliser un signal $D_5$ nul à l'instant initial, on règle, au moyen d'un circuit de réglage 304 comprenant un potentiomètre, le niveau initial du signal $D_5$ à une valeur de quelques millivolts. Pour compenser le décalage de temps qui résulte de ce signal initial non nul,

BAD ORIGINAL

on envoie au circuit de charge 303 une impulsion à décroissance exponentielle qui est délivrée par un comparateur 305 au travers d'une résistance 306 et d'un condensateur 307 reliés en série. La capacité du condensateur 307 détermine la durée du décalage compensé et l'impédance de la résistance 306 détermine la vitesse avec laquelle on rejoint la courbe théorique. Les déterminations de durées très courtes sont erronées, mais on choisit les impédances de la résistance 306 et du condensateur 307 de manière que la courbe théorique soit atteinte au bout d'une période inférieure à la durée d'exposition la plus courte. On a utilisé une résistance de 100k $\Omega$ et un condensateur de 500pF. L'ouverture d'un relai 308 met en oeuvre le circuit de charge et le comparateur 305. Le comparateur 305 envoie une impulsion vers un circuit logique 504 lorsque le comparateur a détecté le début effectif de la charge. Cette impulsion permet le transfert des impulsions d'une horloge 309 à des compteurs 310, 311 et 312. Chaque impulsion de l'horloge 309 incrémente d'une unité le contenu des compteurs 310, 311 et 312.

Le circuit 135 comprend aussi trois comparateurs analogiques 313, 314 et 315 reliés chacun à l'un des compteurs pour bloquer ces compteurs lorsque les comparateurs fournissent un signal de sortie. Le comparateur 313 compare le signal $E_4$ auquel on a rajouté le signal de compensation lampe d'exposition au signal $D_6$ et fournit un signal de sortie lorsque l'égalité est obtenue. Ce signal bloque le compteur 310. Le contenu du compteur 310 représente la durée d'exposition en rouge.

D'une manière analogue, le comparateur 314 compare le signal $E_5$ auquel on a rajouté le signal de compensation lampe d'exposition au signal $D_6$ et émet un signal de sortie lorsque l'égalité des deux signaux est obtenue. Le contenu du compteur 311 est alors bloqué et il représente la durée d'exposition en vert. Le comparateur 315 compare le signal $E_6$ auquel on a rajouté le signal de compensation lampe d'exposition au signal $D_6$ pour bloquer le compteur 312 dont le contenu représente la durée d'exposition en bleue. On peut alors transférer le contenu des compteurs 310, 311 et 312 aux mémoires numériques 125.

Il peut arriver parfois qu'un ou plusieurs signaux $E_4$, $E_5$ ou $E_6$ ne puissent pas être comparés au signal $D_6$ du fait d'un signal trop négatif. Pour éviter que l'on ne puisse pas bloquer les compteurs on utilise un circuit de dépassement 316 qui bloque les compteurs 310, 311 et 312 lorsque le signal $D_5$ atteint un niveau déterminé.

Comme on l'a vu précédemment, on prend comme durée d'exposition unité, la durée d'exposition utilisée pour la diapositive de référence. Par exemple pour cette diapositive de référence le contenu des compteurs 310, 311 et 312 est égal à 220. Si, pour obtenir une épreuve acceptable de la diapositive de référence on est obligé d'utiliser des durées d'exposition de 0,176 s on prendra comme unité de temps de référence une durée égale à 0,176/220 = 80 x 10⁻⁵ s. Cette unité de temps est obtenue par le circuit 129 en affichant sur le tabl 8 de la tireuse le coefficient 80.

Pour obtenir le tirage d'une diapositive quelconque, le poste de tirage 139 commande l'interposition des filtres de tirage jaune, magenta et cyan en fonction du contenu des mémoires 127. Lorsque l'unité de temps affic' sur le tableau 8 est par exemple de 80 et que le contenu de la mémoire 127 relative au rouge est de 240, on obtient une durée d'exposition en rouge de $240 \times 80.10^{-5}$ s soit 192 ms. Après cette durée on interpose le filtre cyan s le faisceau de tirage.

Pour obtenir les durées d'exposition, on utilise des compteurs, non représentés, que l'on incrémente d'une unité à chaque fois qu'une durée de temps unité ($80 \times 10^{-5}$ s pour l'exemple numérique décrit précédemment) s'est écoulé. Le contenu de ces compteurs est comparé au contenu des mémoires 127. Lorsqu'il y a égalité on introduit le filtre correspondant sur le faisceau d'exposition. L'introduction du dernier filtre de tirage sur le faisceau d'exposition commande la fermeture de l'obturateur général et la remise des trois filtres de tirage à leur position initiale hors du faisceau ainsi que la remise à zéro des compteurs non représentés pour préparer la prochaine exposition.

Comme on l'a vu précédemment, on peut régler la pente des droites représentant la courbe log t = f(d) pour d compris entre A et B (figure 5) p les circuits 194, 195 et 196. La pente est déterminée par le gain des amplificateurs opérationnels $a_{18}$, $a_{19}$ et $a_{20}$. Pour régler cette pente on relie to à tour l'afficheur aux points $E_4$, puis $E_5$ et enfin $E_6$ en ayant placé dans le poste d'analyse une diapositive dont la densité moyenne est inférieure à la densité de la diapositive de référence. Si, par exemple, la densité moyen de la diapositive de référence est de 1,0 et que la densité moyenne de la diapositive dans le poste d'analyse est de 0,60 une pente de 1 correspond à des lectures sur le dispositif d'affichage de -0,40 pour le rouge, -0,60 pou le vert et -0,40 pour le bleu. On peut modifier la pente en agissant sur les potentiomètres 197, 198 et 199 des circuits 195, 196 et 197 et en lisant les valeurs correspondantes sur le dispositif d'affichage.

Comme il est bien connu dans la technique du tirage photographique on peut utiliser un double niveau d'illuminant, un niveau "haut" fourni directement par la lampe d'exposition et un niveau "bas" fourni par une densité neutre ou une grille métallique disposée devant la lampe d'expositior Pour régler automatiquement le niveau d'illuminant de la tireuse, on compare les signaux $E_4$, $E_5$ et $E_6$ à une tension de référence réglable. Le niveau de la tension de référence est choisi un peu supérieur à celui correspondant au

0008557

temps de pose le plus court contrôlable par le mécanisme des filtres et l'obturateur de la tireuse. Si l'une ou plusieurs des tensions $E_4$, $E_5$ et/ou $E_6$ est inférieure à la tension de référence, le signal de sortie du comparateur est "bas" ; sinon, il est "haut". Cette indication est emmagasinée dans une logique non représentée pour être transmise à une autre mémoire qui commandera ou non, le moment venu l'introduction de la densité neutre ou de la grille devant la lampe d'exposition. L'indication est aussi fournie à un circuit, non représenté, qui commande l'émission de courants de corrections $R_2$, $V_2$ et $B_2$ compensant l'effet de la densité neutre ou de la grille. Cette correction est réglable en densité par un potentiomètre.

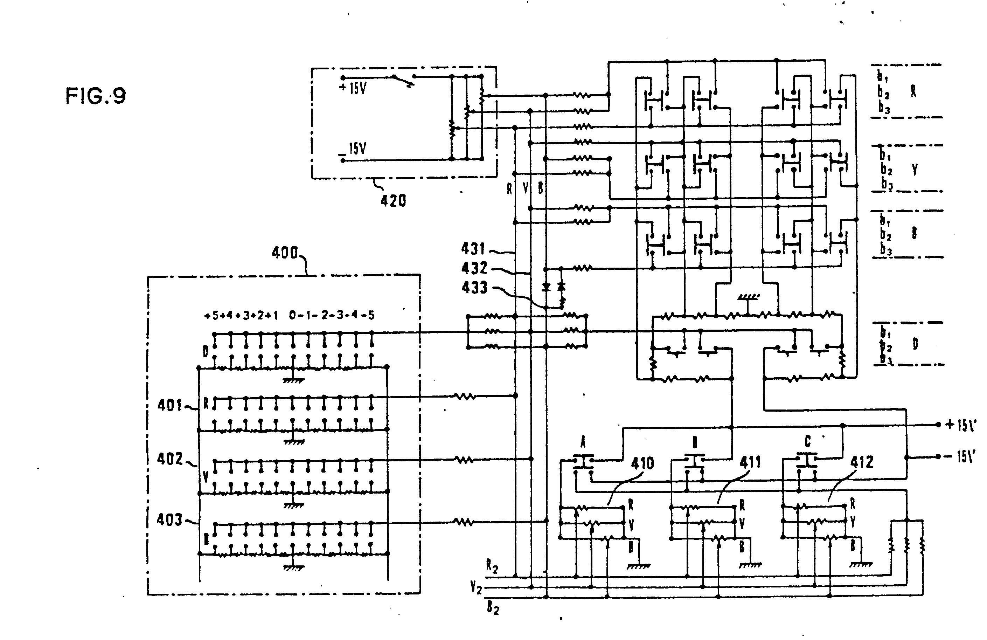

Pour pallier les dérives qui ont lieu par exemple dans le cas d'une pertubation du traitement chimique du papier et pour éviter des retouches provisoires de la filtration de base de la tireuse, on utilise un circuit de correction 400 représenté à la figure 9. Le circuit 400 comprend un circuit 401 permettant de régler la densité neutre. Le circuit 401 est constitué de plusieurs résistances reliées en séries entre +15V et la masse, d'une part et entre -15V et la masse, d'autre part. Le circuit 401 est analogue à un potentiomètre à plots. On peut prélever le potentiel entre chacune des résistances et l'envoyer sur chacun des trois conducteurs 431, 432, 433 qui sont reliés respectivement aux canaux du circuit 135 recevant le signal $E_4$, le signal $E_5$ et le signal $E_6$. Les impédances des résistances du circuit 401 neutre sont telles qu'elles fournissent une correction de 5% lorsqu'on passe d'un plot au plot suivant.

Le circuit 400 comprend aussi trois circuits identiques 402, 403 et 404 qui sont analogues au circuit 401 mais les impédances des résistances sont choisies de manière à fournir une correction de couleur de 4% lorsqu'on passe d'un plot au plot suivant.

Avantageusement, on peut utiliser la tireuse pour le retirage des épreuves, c'est-à-dire lorsque la correction automatique seule n'a pas permis d'obtenir une épreuve acceptable. On examine les épreuves après traitement et lors de cet examen on porte les valeurs des corrections à rajouter sur la monture de la diapositive. On range les épreuves acceptables avec les diapositives correspondantes dans un "portefeuille" et on met de côté les diapositives à retirer. L'opératrice de tirage reçoit à nouveau la pochette contenant les diapositives à retirer et dans le portefeuille les épreuves acceptables et les diapositives correspondantes, puis elle vide la pochette et elle introduit, de la manière indiquée précédemment, les diapositives à retirer en affichant sur le clavier 11 les corrections supplémentaires à introduire. La tireuse fonctionne comme indiqué précédemment. Dans un autre mode de réalisation on peut porter la correction sur les épreuves inacceptables et l'opératrice cherche la diapositive correspondante en observant les diapositives devant la visionneuse 3 prévue sur la table 101. Au moyen du clavier 11, elle affiche ensuite les corrections supplémentaires à apporter aux corrections automatiques.

Le clavier 11 est muni de seize touches de correction, quatre pour le neutre, deux pour le jaune, deux pour le bleu, deux pour le magenta, deux pour le vert, deux pour le bleu-vert ou cyan et deux pour le rouge.

Lorsqu'on appuie sur l'une des touches de correction du clavier 11 on transmet une information codée aux entrées logiques $b_1$, $b_2$ et $b_3$ d'un multiplexeur (figure 9). Le multiplexeur est équivalent à un jeu de commutateurs qui se ferment de manière à transmettre des signaux aux divers conducteurs 431, 432 et 433. Pour conserver la densité de l'épreuve on répartit les corrections de couleur : + 2/3 sur la couleur corrigée et - 1/3 sur les deux autres couleurs ou - 2/3 sur la couleur corrigée et + 1/3 sur les deux autres couleurs.

On peut choisir les valeurs des résistances formant le diviseur de tension de manière que la correction apportée entre deux touches corresponde à 18% en densité et 14% en couleur. Avantageusement, on peut, en utilisant des diodes et en modifiant les impédances des résistances reliant les commutateurs du multiplexeur aux conducteurs 431, 432 et 433, modifier le taux de correction apporté entre deux touches jaunes pour ramener cette variation de correction à 10%.

Le clavier 11 comprend trois touches supplémentaires "A", "B" et "C" reliant trois réseaux de potentiomètres 410, 411 et 412 aux conducteurs 431, 432 et 433. Chacun des potentiomètres permet d'établir une correction préréglable ; la correction nulle étant obtenue au milieu du potentiomètre. Les trois touches "A", "B" et "C" correspondent soit à un type de correction que l'on rencontre fréquemment soit à une marque de diapositive qui nécessite une correction supplémentaire déterminée quel que soit le sujet soit à d'autres combinaisons que l'on préfère utiliser.

Avantageusement, les corrections introduites par les touches du clavier 11 sont annulées après l'introduction d'une diapositive dans le poste de chargement tandis que les corrections introduites par le circuit 400 sont permanentes.

Comme on le voit sur la figure 9, on peut prévoir un circuit 420 de correction tenant compte du format de la diapositive et de son grandissement.

## REVENDICATIONS

1 - Tireuse photographique munie d'un poste de chargement pour ranger les vues originales en monture pour leur tirage, d'un poste d'analyse pour déterminer les durées d'exposition et d'un poste de tirage pour les exposer, afin d'obtenir automatiquement le nombre commandé d'épreuves pour chaque vue originale en monture d'un ordre sans mélanger les ordres successifs, tireuse caractérisée en ce qu'elle comprend au moins deux paniers distincts et mobiles suivant une trajectoire en forme de boucle fermée qui traverse le poste de chargement pour maintenir les vues originales d'un ordre séparées des vues originales d'un autre ordre et les transférer du poste de chargement au poste d'analyse en vue de déterminer les durées d'exposition avant leur introduction dans le poste de tirage, un clavier de commande pour emmagasiner dans une mémoire le nombre d'expositions à réaliser pour chaque vue originale et des moyens pour extraire les vues de la tireuse tout en indiquant l'ordre auquel elles appartiennent.

2 - Tireuse conforme à la revendication 1, caractérisée en ce que le poste de chargement comprend une fente d'introduction des vues qui peut être fermée par un volet d'obturation pour empêcher l'introduction d'une vue lorsqu'un compartiment des paniers ne se trouve pas en position pour recevoir la vue ou lorsque les vues extraites de la tireuse n'ont pas été rangées.

3 - Tireuse conforme à l'une quelconque des revendications 1 et 2, caractérisée en ce que le clavier comprend une touche "fin d'ordre" qui commande le déplacement des paniers dans le poste de chargement pour ne pas introduire de vues correspondant à deux ordres distincts dans le même panier.

4 - Tireuse conforme à l'une quelconque des revendications 1 à 3, caractérisée en ce que les moyens d'extraction comprennent au moins une courroie sans fin sur laquelle on empile les vues après leur passage au poste de tirage et un moteur commandé par une logique pour mettre en oeuvre la courroie lorsque l'ordre est terminé ou lorsque la pile est trop haute.

5 - Tireuse conforme à la revendication 4, caractérisée en ce que la courroie dépose la pile de vues dans un godet muni d'un capteur et en ce que les moyens d'extraction comprennent au moins un voyant pour indiquer l'ordre auquel les vues appartiennent.

6 - Tireuse conforme à l'une quelconque des revendications 1 à 5, caractérisée en ce que la mémoire consiste en au moins un registre à décalage pour emmagasiner la suite des nombres correspondant aux nombres d'épreuves commandées pour les vues introduites dans le poste de chargement.

7 - Tireuse conforme à la revendication 2, caractérisée en ce que le poste de chargement comprend un capteur situé au-delà du volet d'obturation à une distance supérieure à la longueur des vues pour ne commander l'enregistre-

ment du nombre d'exemplaires dans la mémoire que lorsqu'on ne peut plus extraire la vue du poste de chargement.

8 - Procédé de détermination des temps de pose d'une tireuse photographique caractérisé en ce que l'on compare le signal représentatif de la densité moyenne de l'original avec les limites d'un intervalle de densité ($d_1$, $d_2$) et en ce que les logarithmes des temps de pose sont égaux à une première constante lorsque les densités sont inférieures à la limite inférieure de l'intervalle, sont égaux à une seconde constante lorsque les densités sont supérieures à la limite supérieure de l'intervalle de densité et varient linéairement de cette première constante à cette seconde constante lorsque les densités sont comprises dans l'intervalle $d_1$, $d_2$.

9 - Procédé conforme à la revendication 8, caractérisé en ce que la variation des logarithmes des temps de pose à l'intérieur de l'intervalle peut se représenter sous la forme d'une ligne brisée.

10- Procédé conforme à l'une quelconque des revendications 8 et 9, caractérisé en ce que les pentes des droites représentatives des courbes exprimant les logarithmes des durées d'expositions pour chacune des composantes trichromatiques en fonction des densités de l'original sont distinctes.

11 - Procédé conforme à l'une quelconque des revendications 8 à 10, caractérisé en ce que les valeurs des premières et secondes constantes relatives à chacune des composantes trichromes sont distinctes.

12 - Procédé conforme à l'une quelconque des revendications 8 à 11, caractérisé en ce que l'on prend comme origine des logarithmes des durées d'exposition, les durées d'exposition d'un original de référence.

13 - Dispositif pour la mise en oeuvre du procédé conforme à l'une quelconque des revendications 8 à 12, caractérisé en ce qu'il comprend au moins une photodiode reliée à un amplificateur logarithmique / pour, d'une part, fournir un signal fonction du flux émis par la lampe d'analyse et, d'autre part, du flux transmis par la vue à analyser.

14 - Dispositif conforme à la revendication 13, caractérisé en ce qu'il comprend un circuit pour fournir un premier signal représentatif de la fonction : mesure du flux transmis par la vue moins mesure du flux émis par la lampe d'analyse.

15 - Dispositif conforme à la revendication 14, caractérisé en ce qu'il comprend un circuit agencé de manière à ajouter une constante pour que le premier signal soit nul lorsqu'on analyse une vue de référence.

16 - Dispositif conforme à l'une quelconque des revendications 14 et 15, caractérisé en ce qu'il comprend un circuit de limitation muni de deux diodes polarisées différemment pour limiter le signal entre deux valeurs différentes.

17 - Dispositif conforme à la revendication 16, caractérisé en ce qu'il comprend un circuit pour modifier la pente de la courbe représentative des logarithm

0008557

des durées d'exposition en fonction des densités de la vue disposée dans le poste d'analyse lorsque la densité est supérieure à une valeur déterminée et inférieure à la limite supérieure de l'intervalle de densité.

18 - Dispositif conforme à la revendication 17, caractérisé en ce que ce circuit comprend un amplificateur opérationnel dont les deux entrées sont reliées à une source de potentiel variable par l'intermédiaire de deux résistances disposées en parallèles, en ce que l'entrée négative de l'amplificateur - est reliée à la masse par l'intermédiaire d'une résistance, en ce que les deux entrées sont reliées entre elles par un potentiomètre et en ce que le potentiomètre est relié à l'entrée négative de cet amplificateur par une diode pour, d'une part, au moyen de la source de potentiel variable, modifier la valeur des densités à partir de laquelle on change la pente de la courbe et, d'autre part, grâce au réglage du potentiomètre, modifier la pente de cette courbe.

19 - Dispositif conforme à l'une quelconque des revendications 13 à 18 caractérisé en ce qu'il comprend trois circuits pratiquement identiques permettant de faire varier la pente des droites représentant la fonction $\log t = f(d)$ pour chacune des composantes trichromes lorsque d est compris entre $d_1$ et $d_2$ ; ces circuits comprenant chacun un amplificateur opérationnel à gain ajustable.

20 - Dispositif conforme à l'une quelconque des revendications 13 à 19, caractérisé en ce qu'il comprend un circuit de compensation couleur fournissant un signal représentatif de chacune des composantes colorées de la vue et comprenant, pour chaque couleur, un circuit de limitation pour écrêter les corrections de couleurs entre deux valeurs déterminées et "réinjecter" un signal correspondant à la moitié de la valeur écrêtée sur les deux autres canaux de couleurs.

FIG.1

FIG.2

3-9

3000

FIG.4

FIG.5

FIG.6

6-9

000855

0008557

FIG.7

FIG.8

FIG.9